# EUROPEAN PATENT APPLICATION

(11) **EP 1 548 539 A2**
(43) Date of publication of application: **29.06.2005**
(21) Application number: 04257110.9
(22) Date of filing: 17.11.2004
(51) Int. Cl.: G06F 1/00

(54) **Document management apparatus, method and program and a recording medium storing the document management program**

(30) Priority: 17.11.2003 JP 2003386551; 01.11.2004 JP 2004318343
(71) Applicant: Ricoh Company, Ltd., Tokyo 143-8555 (JP)
(72) Inventor: Kawada, Jun, Takatsu-ku Kawasaki-shi Kanagawa (JP)
(74) Representative: Mounteney, Simon James

(57) **Abstract**

A document management apparatus (10) receives an acquisition request of authentication information from a client that requests acquisition authentication information regarding the documents or the document storing means for storing the documents, the authentication information containing information regarding a time limit of use of the authentication information and/or information regarding a number of times of use of the authentication information. The authentication information is produced in accordance with the acquisition request of the authentication information, and is sent to a client. The document management apparatus (10) receives a request containing the authentication information from the client that has sent the authentication information or a client different from the client that has sent the authentication information. The document management apparatus determines validity of the authentication information contained in the request.

## Description

### BACKGROUND OF THE INVENTION

### 1. Field of the Invention

The present invention generally relates to document management techniques and, more particularly, to a document management apparatus and method for managing document data stored in a document management apparatus that is accessible by users through a network.

### 2. Description of the Related Art

Generally, an apparatus such as a server having a folder to store a document (a document data file) is capable of setting authority to use a predetermined folder for each user.

For example, a server is capable of giving authorization to a use A to store document files in a folder C and to update document files stored in the folder C. Additionally, the server is capable of setting updating/deleting authorization to update or delete the document files, and also capable of setting only storing authorization with respect to a user B to store document files in the folder C.

The user A may send a user name and a password to the server by using an apparatus A, which is connected to the server through a network. When a connection between the apparatus A and the server is permitted, the user A sends a document file or document data (hereinafter, simply referred to as a document) so as to store the document in the folder C or update or delete documents stored in the folder C.

However, in the above-mentioned conventional example, if the document to be accessed is not stored in the apparatus A but stored in an apparatus B, which is connected to the apparatus A through a network, there is a problem in that, even if the apparatus B is operated by the same user, it is difficult to store the document in the folder of the server directly while maintaining good security.

Additionally, when storing in the server a document stored in the apparatus B, there is a problem in that the apparatus A must acquire the document from the apparatus B through the network, and thereafter store the acquired document in the server through the network.

Further, when using a folder to which an access is permitted by using the apparatus A or apparatus B, there is a problem in that a time limit of use and a number of times of use cannot be designated.

### SUMMARY OF THE INVENTION

It is a general object of the present invention to provide an improved and useful document management apparatus and method in which the above-mentioned problems are eliminated.

A more specific object of the present invention is to provide a document management apparatus and method which permits a user to use a folder or a document while maintaining good security without giving a load to a network.

Another object of the present invention is to provide a document management apparatus and method which can designate a time limit of use and a number of times of use when a user uses a folder or a document.

In order to achieve the above-mentioned objects, there is provided according to one aspect of the present invention a document management apparatus for managing documents, comprising: authentication information acquisition request receiving means for receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information; authentication information producing means for producing the authentication information in accordance with the acquisition request of the authentication information; authentication information sending means for sending the authentication information to the client; request receiving means for receiving a request containing the authentication information from the client that has sent the authentication information or a client different from the client that has sent the authentication information; and validity determining means for determining validity of the authentication information contained in the request.

In the document management apparatus according to the present invention, the validity determining means may determine the validity of the authentication information based on the time limit of use of the authentication information. Additionally, the validity determining means may determine the validity of the authentication information based on the number of times of use of the authentication information.

In the document management apparatus according to the present invention, the acquisition request of the authentication information may further contain information regarding authority of the authentication information when the time limit of use or the number of times of use runs out.

In the document management apparatus according to the present invention, the information regarding the time limit of use of the authentication information may indicate whether the authentication information is valid within a designated time limit or the authentication information is valid permanently. The information regarding the number of times of use of the authentication information may indicate whether the authentication information is valid for one time use or valid for any number of times of use. The information regarding the number of times of use of the authentication information may indicate whether the authentication information is valid for designated number of times of use or valid for any number of times of use.

In the document management apparatus according to the present invention, the information regarding authority of the authentication information when running out the time limit of use or the number of times of use may indicate whether to invalidate the authentication information or give a limited authority when the time limit of use or the number of times of use runs out.

The document management apparatus according to the present invention may further comprise changing means for changing the time limit of use and/or the number of times of use of the authentication information in accordance with the request containing the authentication information.

Additionally, there is provided according to the another aspect of the present invention, a document management method for managing documents in a document management apparatus, comprising: an authentication information acquisition request receiving step of receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information; an authentication information producing step of producing the authentication information in accordance with the acquisition request of the authentication information;
an authentication information sending step of sending the authentication information to the client; a request receiving step of receiving a request containing the authentication information from the client that has sent the authentication information or a client different from the client that has sent the authentication information; and a validity determining step of determining validity of the authentication information contained in the request.

In the document management method according to the present invention, the validity determining step determines the validity of the authentication information based on the time limit of use of the authentication information. Additionally, the validity determining step may determine the validity of the authentication information based on the number of times of use of the authentication information.

In the document management method according to the present invention, the acquisition request of the authentication information may further contain information regarding authority of the authentication information when the time limit of use or the number of times of use runs out.

In the document management method according to the present invention, the information regarding the time limit of use of the authentication information may indicate whether the authentication information is valid within a designated time limit or the authentication information is valid permanently. The information regarding the number of times of use of the authentication information may indicate whether the authentication information is valid for one time use or valid for any number of times of use. The information regarding the number of times of use of the authentication information may indicate whether the authentication information is valid for designated number of times of use or valid for any number of times of use.

In the document management method according to the present invention, the information regarding authority of the authentication information when running out the time limit of use or the number of times of use may indicate whether to invalidate the authentication information or give a limited authority when the time limit of use or the number of times of use runs out.

The document management method according to the present invention may further comprise a changing step of changing the time limit of use and/or the number of times of use of the authentication information in accordance with the request containing the authentication information.

Additionally, there is provided according to another aspect of the present invention a recording medium storing a document management program that causes a computer to perform the above-mentioned document management method for managing documents in a document management apparatus.

Further, there is provided according to another aspect of the present invention a document management program that causes a computer to perform the above-mentioned document management method for managing documents in a document management apparatus.

According to the present invention, a user is permitted to use a folder or a document while maintaining good security without giving a load to a network. Additionally, a time limit of use and a number of times of use can be designated when a user uses a folder or a document.

Other objects, features and advantages of the present invention will become more apparent from the following detailed description when read in conjunction with the accompanying drawings.

### BRIEF DESCRIPTION OF THE DRAWINGS

FIG. 1 is a block diagram of hardware of a document management server according to a first embodiment of the present invention;
FIG. 2 is an illustration of an example of a functional structure of the document management server according to the first embodiment of the present invention;
FIG. 3 is a sequence chart for explaining an outline of a process in the present embodiment;
FIG. 4 is an illustration for explaining an example of a session start request;
FIG. 5 is an illustration for explaining an example of a session start response
FIG. 6 is an illustration for explaining an example of a folder ticket acquisition request;
FIG. 7 is an illustration for explaining an example of a folder ticket acquisition response;
FIG. 8 is an illustration for explaining an example of a document storing instruction request;
FIG. 9 is an illustration for explaining an example of a document storing instruction response;
FIG. 10 is an illustration of an example of a session start request according to a folder ticket;
FIG. 11 is an illustration for explaining an example of a session according to a folder ticket;
FIG. 12 is an illustration for explaining an example of a session start response according to a folder ticket;
FIG. 13 is an illustration for explaining an example of a folder ID acquisition request;
FIG. 14 is an illustration for explaining an example of a folder ID acquisition response;
FIG. 15 is an illustration for explaining an example of a document storing request;
FIG. 16 is an illustration for explaining an example of a document storing response;
FIG. 17 is an illustration for explaining an example of kinds of the folder ticket;
FIG. 18 is an illustration for explaining an example of designating a time limit of use of a folder ticket;
FIG. 19 is an illustration for explaining an example of designating a number of times of use of a folder ticket;
FIG. 20 is an illustration for explaining another example of designating a number of times of use of a folder ticket;
FIG. 21 is an illustration for explaining an example in which a client designates authority of a folder ticket of which time limit of use or a limit number of times of use is reached;
FIG. 22 is a flowchart (part 1) of a process of producing a folder ticket;
FIG. 23 is an illustration for explaining an example of a folder ticket (temporary single ticket) acquisition request;
FIG. 24 is an illustration for explaining an example of a folder ticket (temporary single ticket);
FIG. 25 is a flowchart of a session start process according to a folder ticket (temporary single ticket);
FIG. 26 is an illustration for explaining an example of a folder ticket (temporary multiple ticket) acquisition request;
FIG. 27 is an illustration for explaining an example of a folder ticket (temporary multiple ticket);
FIG. 28 is a flowchart for explaining an example of a session start process according to a folder ticket (temporary multiple ticket);
FIG. 29 is an illustration for explaining an example of a folder ticket (permanent single ticket) acquisition request;
FIG. 30 is an illustration for explaining an example of a folder ticket (permanent single ticket);
FIG. 31 is a flowchart of a session start process according to a folder ticket (permanent single ticket) ;
FIG. 32 is an illustration for explaining an example of a folder ticket (permanent multiple ticket) acquisition request;
FIG. 33 is an illustration for explaining an example of a folder ticket (permanent multiple ticket);
FIG. 34 is a flowchart for explaining an example of a session start process according to a folder ticket (permanent multiple ticket);
FIG. 35 is a flowchart (part 2) for explaining a folder ticket production process;
FIG. 36 is an illustration for explaining an example of a folder ticket (temporary limited ticket) acquisition request;
FIG. 37 is an illustration for explaining an example of a folder ticket (temporary single ticket);
FIG. 38 is a flowchart of a session start process according to a folder ticket (temporary limited ticket) ;
FIG. 39 is an illustration for explaining an example of a folder ticket (temporary unlimited ticket) acquisition request;
FIG. 40 is an illustration for explaining an example of a folder ticket (temporary unlimited ticket);
FIG. 41 is a flowchart for explaining an example of a session start process according to a folder ticket (temporary unlimited ticket);
FIG. 42 is an illustration for explaining an example of a folder ticket (permanent limited ticket) acquisition request;
FIG. 43 is an illustration for explaining an example of a folder ticket (permanent limited ticket);
FIG. 44 is a flowchart of a session start process according to the folder ticket (permanent limited ticket);
FIG. 45 is an illustration for explaining an example of a folder ticket (permanent unlimited ticket) acquisition request;
FIG. 46 is an illustration for explaining an example of a folder ticket (permanent unlimited ticket);
FIG. 47 is a flowchart for explaining an example of a session start process according to a folder ticket (permanent unlimited ticket);
FIG. 48 is a functional diagram (part 2) of a document management server according to a second embodiment of the present invention;
FIG. 49 is an illustration for explaining another example of the folder ticket acquisition response;
FIG. 50 is an illustration for explaining another example of the session start response according to a folder ticket; and
FIG. 51 is an illustration for explaining a further example of the session start response according to a folder ticket (temporary single ticket).

### DETAILED DESCRIPTION OF THE PREFERRED EMBODIMENTS

### (First Embodiment)

A description will now be given of a first embodiment of the present invention.

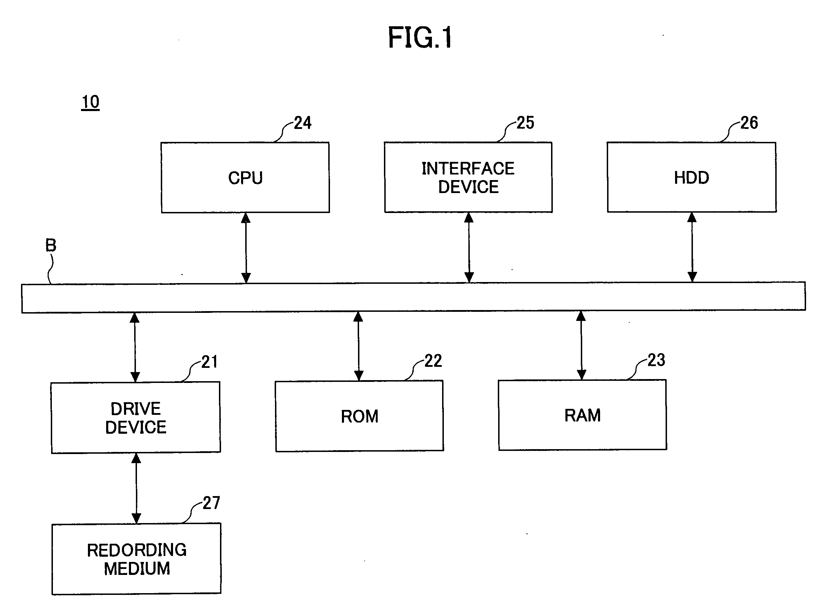

FIG. 1 is a block diagram of hardware of a document management server according to a first embodiment of the present invention. In FIG. 1, structures required for explanation of the present embodiment are illustrated, and structures which are not needed to be explained are not illustrated. The same applied to other drawings.

The hardware structure shown in FIG. 1 comprises a drive device 21, a read only memory (ROM) 22, a random access memory (RAM) 23, a central processing unit (CPU) 24, an interface device 25 and a hard disk drive (HDD) 25, that are connected to each other by a bus B. The interface device 25 is an interface, which connects the document management server 10 to a network.

A program of the document management server 10 (hereinafter, simply referred to as a document management program) is provided to the document management server 10 by a recording medium 27 such as a CD-ROM, or it is downloaded through the network. The recording medium 27 is set in the drive device 21, and necessary data and the document management program are read from the recording medium 27 and installed in the HDD 26 through the drive device 21.

The ROM 22 stores data, programs, etc. The document-control program is read from the HDD 26 at the time of starting the document management server 10, and is stored in the RAM 23. The CPU 24 performs various tasks in accordance with the document management program read and stored in the RAM 23.

The HDD 26 has a folder or a directory to store data, files, documents (electronic documents or document data), the document management program, etc.

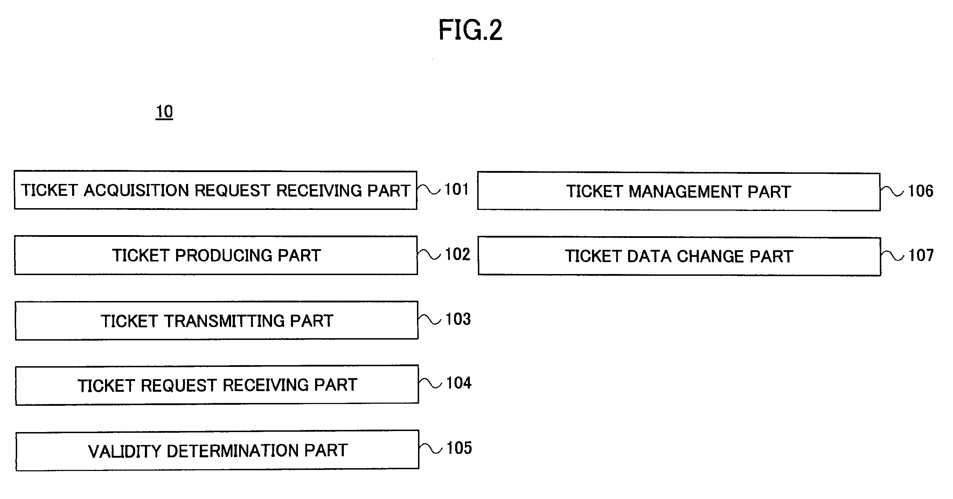

FIG. 2 shows an example of a functional structure of the document management server 10 according to the present embodiment. FIG. 2 is a part of the functional block diagram of the document management server according to the present embodiment.

As shown in FIG. 2, the document management server 10 comprises a ticket acquisition request receiving part 101, a ticket producing part 102, a ticket transmitting part 103, a ticket request receiving part 104, a validity determination part 105, a ticket management part 106 and a ticket data change part 107. The ticket acquisition request receiving part 101 receives a document ticket or a folder ticket from a client (for example, a client A mentioned later. The document ticket serves as authentication information, which authenticates permission of a document managed in the document management server 10. The folder ticket serves as authentication information, which authenticates permission of a folder in the document management server 10.

The ticket producing part 102 produces a document ticket or a folder ticket in accordance with information contained in the document ticket or the folder ticket which the ticket acquisition request receiving part 101 received, the information relating to a time limit of use and/or a number of times of use of the document ticket or the folder ticket.

The ticket transmitting part 103 sends a document ticket ID or a folder ticket ID, which discriminates the document ticket or the folder ticket which the ticket producing part 102 produced, to a requesting client (for example, a client A mentioned later) which requested the document ticket or the folder ticket.

The ticket request receiving part 104 receives a request (for example, a session start request mentioned later) containing the document ticket ID or the folder ticket ID from a client (for example, a client A or a client B mentioned later).

The validity determination part 105 determines the validity of the document ticket or the folder ticket based the document ticket ID or the folder ticket ID contained in the request received by the ticket request receiving part 104 by referring to corresponding document ticket or folder ticket which the ticket management part 106 manages in accordance with the time limit of use or the number of times of use of the document ticket or the folder ticket.

The ticket management part 106 manages and saves the document ticket or the folder ticket in the RAM 23 or the HDD 26.

The ticket data change part 107 changes the number of times of use of the document ticket or the folder ticket, or changes the time limit of use of the document ticket or the folder ticket according to the request from a client (for example, a client B).

It should be noted that, in the following description, a case of using the folder ticket will be mainly explained for the sake of simplification. However, this does not limit the present invention.

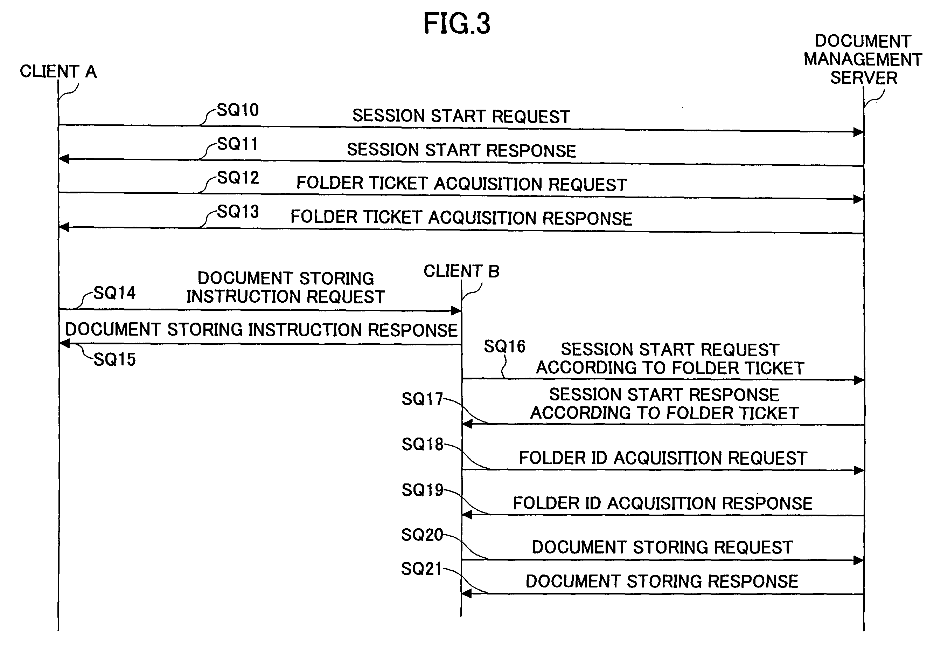

Hereafter, a description will be given, with reference to FIG. 3, of a basic process of the present embodiment in a storing a document (document data such as an electronic document), for example. FIG. 3 is a sequence chart for explaining an outline of the process in the present embodiment.

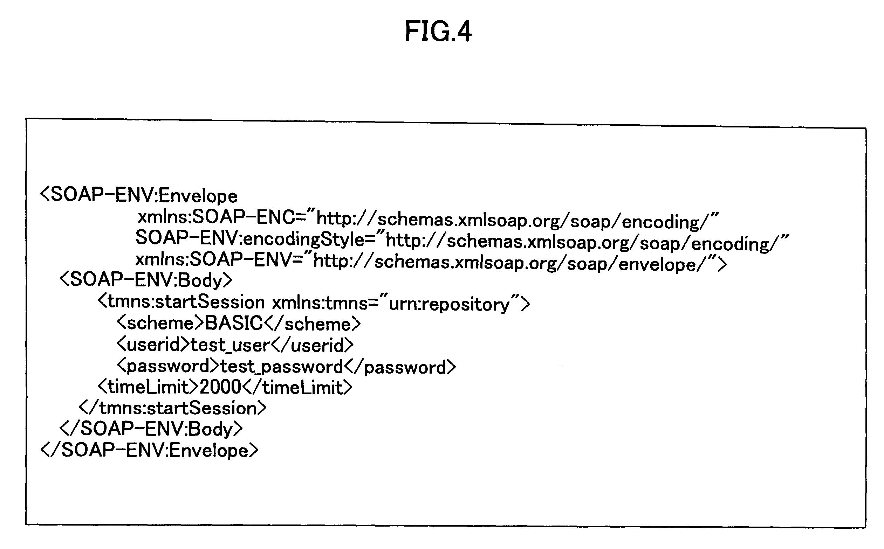

First, a client A produces a start request of a session (a session start request) between the document management server 10 and the client A, and send the session start request to the document management server 10 (sequence SQ10.). An example of the session start request is explained later by referring to FIG. 4.

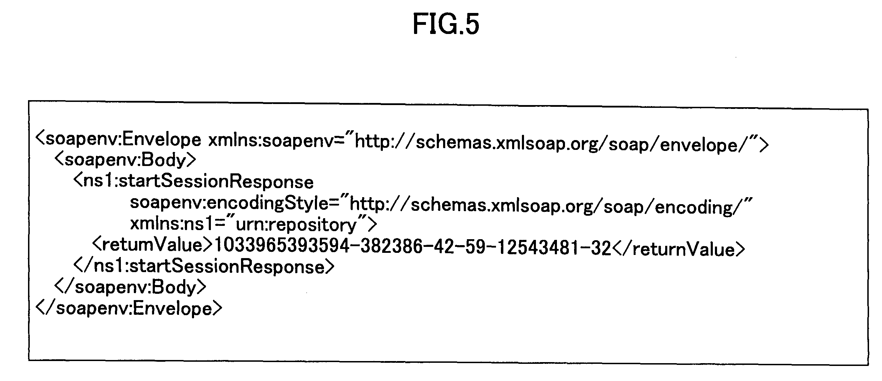

Upon receipt of the session start request, the document management server 10 make an authentication in accordance with the authentication information such as a user ID or a password contained in the session start request. If the document management server 10 determines the authentication information is valid, the document management server 10 produces a session, produces a session start response containing a session ID, which discriminates the session, and sends the session start response to the client A (sequence SQ11.). It should be noted that an example of the session start response will be explained later by referring to FIG. 5.

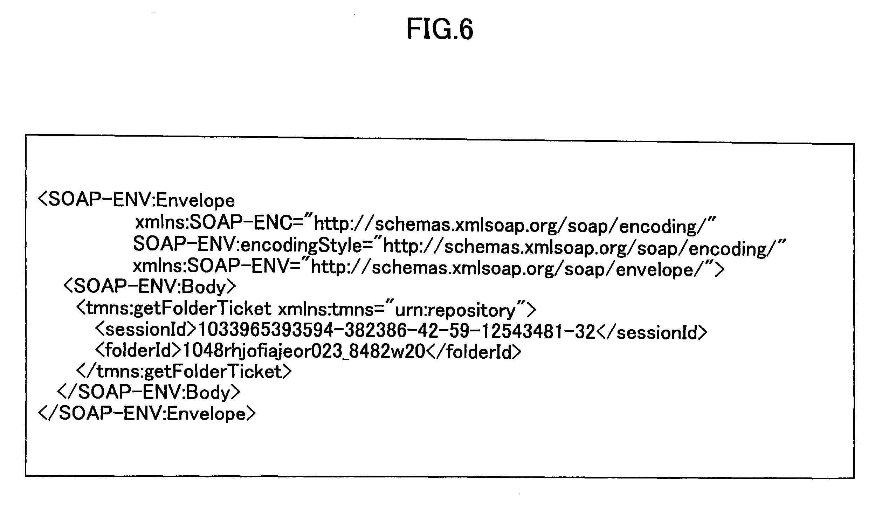

The document management server 10 manages the produced session and the session ID, which discriminates the produced session by relating them to each other. Upon receipt of the session start response, the client A produces an acquisition request (a folder ticket acquisition request) of the folder ticket, which is authentication information authenticating permission of use of the folder of the document management server 10 containing the session ID contained in the session start response, and sends the folder ticket acquisition request to the document management server 10 (sequence SQ12). It should be noted that an example of the folder ticket acquisition request will be explained later by referring to FIG. 6.

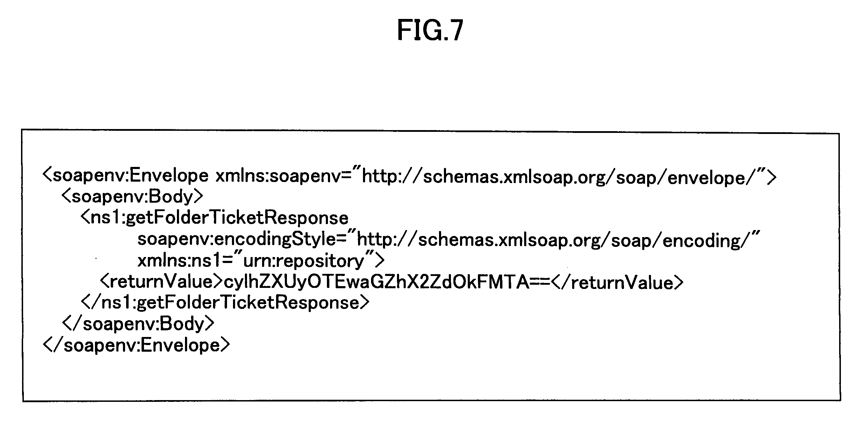

Upon receipt of the folder ticket acquisition request, the document management server 10 determines whether it is a valid request with reference to a corresponding session based on the session ID contained in the received folder ticket acquisition request. If it is determined that the request is valid, the document management server 10 produces a folder ticket containing the folder ID, which discriminates a folder according to the folder ticket acquisition request and also produces a folder ticket acquisition response containing a folder ticket ID which discriminates the folder ticket, and sends the folder ticket acquisition response to the client A (sequence SQ13). It should be noted that an example of the folder ticket acquisition response will be explained later by referring to FIG. 7.

The document management server 10 manages the produced folder ticket and the folder ID, which discriminates the folder ticket by relating them to each other.

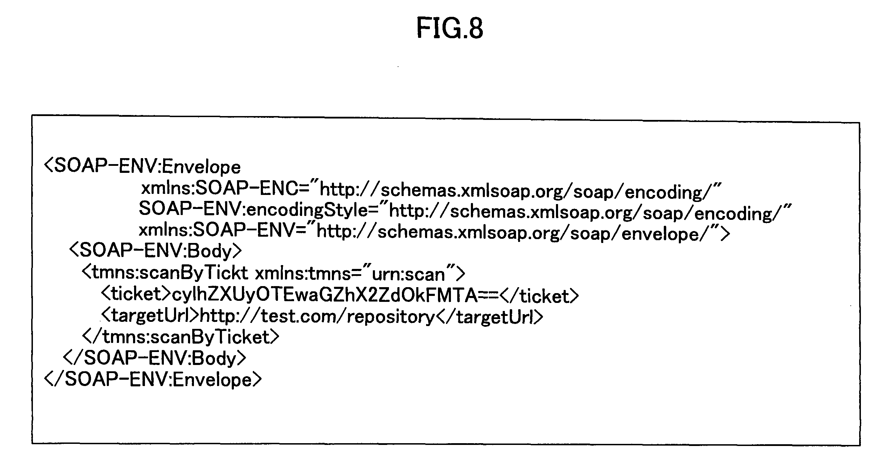

Upon receipt of the folder ticket acquisition request, the client A produces a document storing instruction request, which instructs storage of a document (document data) and contains the folder ticket ID contained in the folder ticket acquisition response and the information (for example, the URL of the document management server 10), and sends the document storing instruction request to the client B (sequence SQ14). It should be noted that an example of the document storing instruction request will be explained later by referring to FIG. 8.

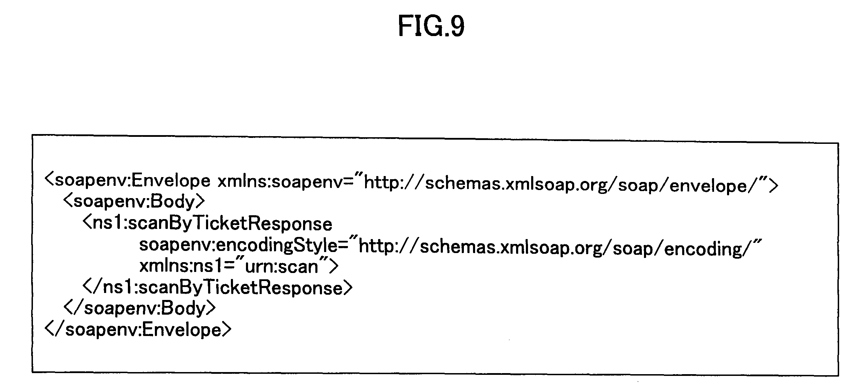

Upon receipt of the document storing instruction request, the client B produces a document storing instruction response corresponding to the document storing instruction request, and sends document storing instruction response to the client A (sequence SQ15). It should be noted that an example of the document storing instruction response will be explained later by referring to FIG. 9.

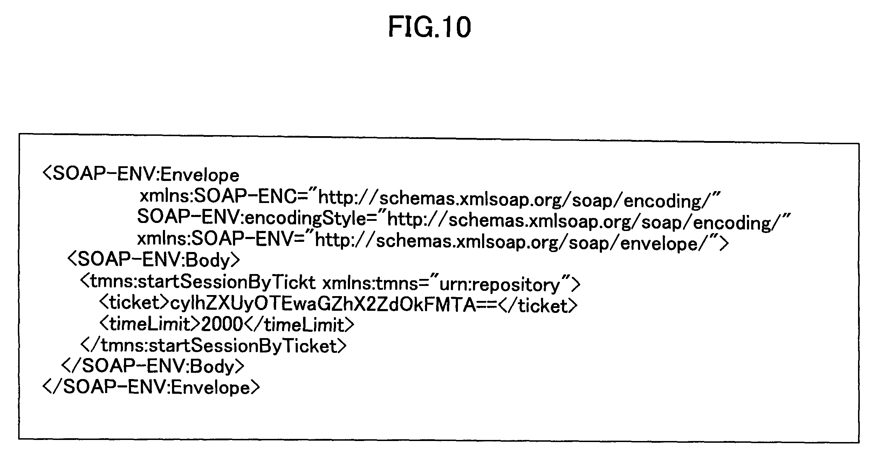

Additionally, the client B produces a start request of a session (a session start request according to a folder ticket) between the client B and the document management server 10. The session start request contains the folder ticket ID contained in the document storing instruction request. The client B sends, the session start request according to the folder ticket to the corresponding document management server 10 in accordance with the discrimination information, which is contained in the document storing instruction request and discriminates the document management server 10 (sequence SQ16). It should be noted that an example of the session start request according to a folder ticket will be explained later by referring to FIG. 10.

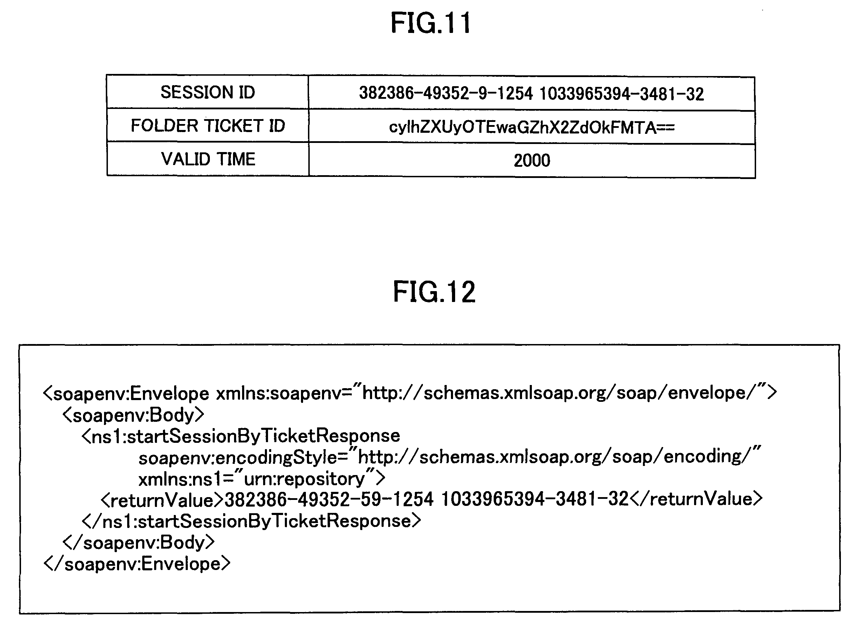

Upon receipt of the session start request according to the folder ticket, the document management server 10 determines whether it is a valid request based on the folder ticket ID contained in the session start request according to the folder ticket by referring to the corresponding folder ticket in accordance with a time limit of use or a number of times of use contained in the folder ticket. If it is determined that the request is valid, the document management server 10 produces a session containing the folder ticket ID and also produces a session start response containing the session ID, which discriminates the session according to the folder ticket, and sends the session start response to the client B (sequence SQ17). It should be noted that an example of the session according to a folder ticket will be explained later by referring to FIG. 11. Additionally, an example of the session start response according to a folder ticket will be explained later by referring to FIG. 12.

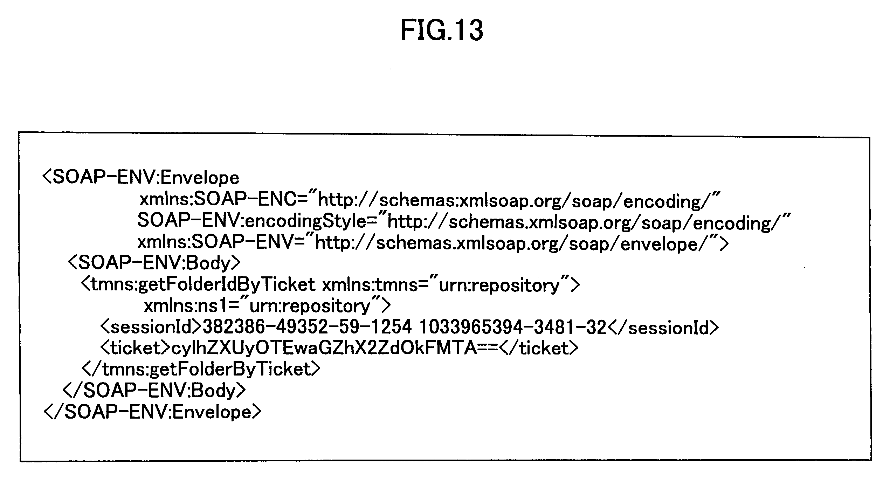

The document management server 10 manages the produced session according to the folder ticket and the session ID, which discriminates the session concerned. Upon receipt of the session start response according to the folder ticket, the client B sends the acquisition request of the folder ID corresponding to the folder ticket ID (a folder ID acquisition request) to the document management server 10 (sequence SQ18), the folder ID acquisition request containing the session ID, which is contained in the session start response according to the folder ticket and discriminates the session according the folder ticket, and the folder ticket ID acquired in the sequence SQ14). It should be noted that an example of the folder ID acquisition request will be explained later by referring to FIG. 13.

Upon receipt of the folder ID acquisition request, the document management server 10 determines whether it is a valid request by referring to the session according to the corresponding folder ticket based on the session ID contained in the folder ID acquisition request.

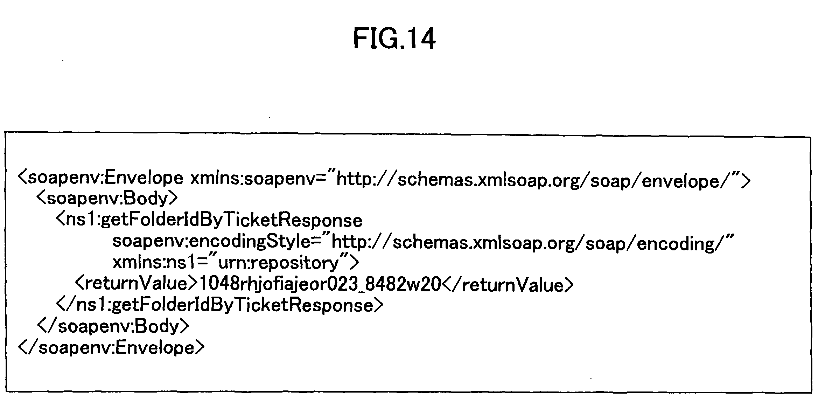

If it is determined that the request is valid, the document management server 10 acquires the folder ID contained in the folder ticket corresponding to the folder ticket ID, produces a folder ID acquisition response containing the folder ID, and sends the folder ID acquisition response to the client B (sequence SQ19). It should be noted that an example of the folder ID acquisition response will be explained later by referring to FIG. 14.

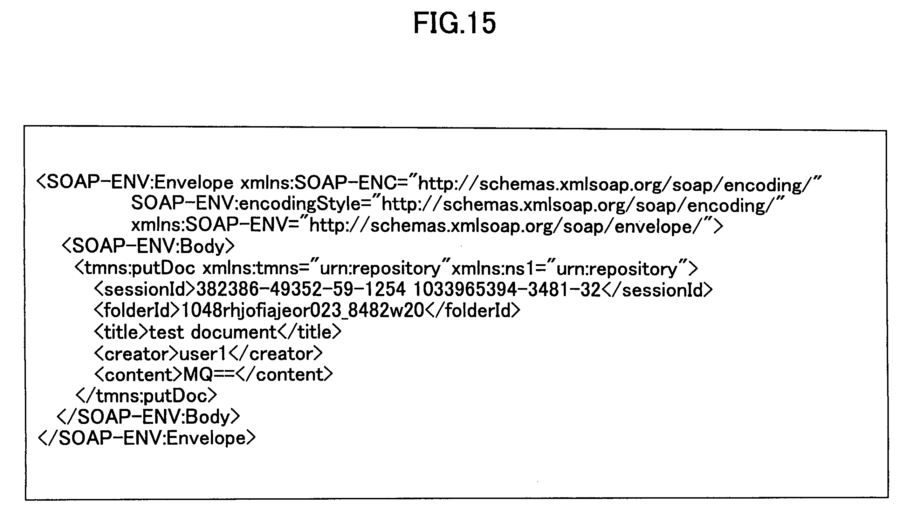

Upon receipt of the folder ID acquisition response, the client B produces a document storing request, which contains the session ID discriminating the session according to the folder ticket and the folder ID contained in the folder ID acquisition response, and sends the document storing request to the document management server 10 (sequence SQ20). It should be noted that an example of the document storing request will be explained later by referring to FIG. 15.

Upon receipt of the document storing request, the document management server 10 determines whether the request is valid in accordance with the session ID contained in the document storing request by referring to the session according to the corresponding folder ticket.

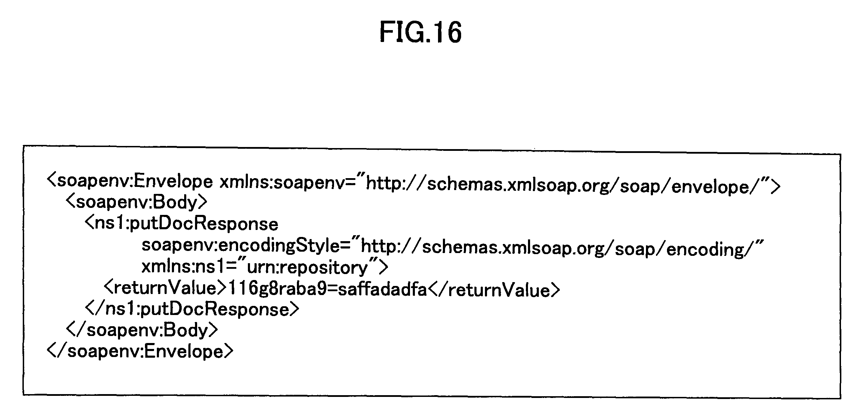

If it is determined that the request is valid, the document management server 10 stores the document contained in the document storing request in the folder designated by the folder ID, produces a document storing response containing the document ID which discriminates the stored document, and sends the document storing response to the client B (sequence SQ21). It should be noted that an example of the document storing response will be explained later by referring to FIG. 16.

According to the sequence shown in FIG. 3, a user can store a document directly in the document management server 10 by transferring the folder ticket ID from the client B to the client A.

Therefore, the client A is not required to store the document by sending the document to the document management server 10 after acquiring the document from the client B, which eliminates a load to the network.

Additionally, although not shown in FIG. 3, the client A may store a document, which is possessed or produced by the client A, in the document management server 10 by using the folder ticket ID.

A description will now be given, with reference to FIG. 4, of an example of the session start request. FIG. 4 is an illustration for explaining an example of the session start request.

As shown in FIG. 4, a user ID is stored in tags <userid> and </userid> of the session start request. Additionally, a password is stored between tags <password> and </password> of the session start request. Further, a valid time period of a session ticket is stored between tags <timeLimit> and </timeLimit> of the session start request in a unit of second.

A description will be given, with reference to FIG. 5, of an example of the session start response. FIG. 5 is an illustration for explaining an example of the session start response. As shown in FIG. 5, a session ID that discriminates a session between the client A and the document management server 10 is stored between tags <returnValue> and </returnValue> of the session start response.

A description will be given, with reference to FIG. 6, of an example of the folder ticket acquisition request. FIG. 6 is an illustration for explaining an example of the folder ticket acquisition request.

As shown in FIG. 6, a session ID that discriminates a session between the client A and the document management server 10 is stored between tags <sessionId> and </sessionId> of the folder ticket acquisition request. Additionally, a folder ID that discriminates a folder which a user desires to acquire permission of use between tags <folderId> and </folderId> of the folder ticket acquisition request.

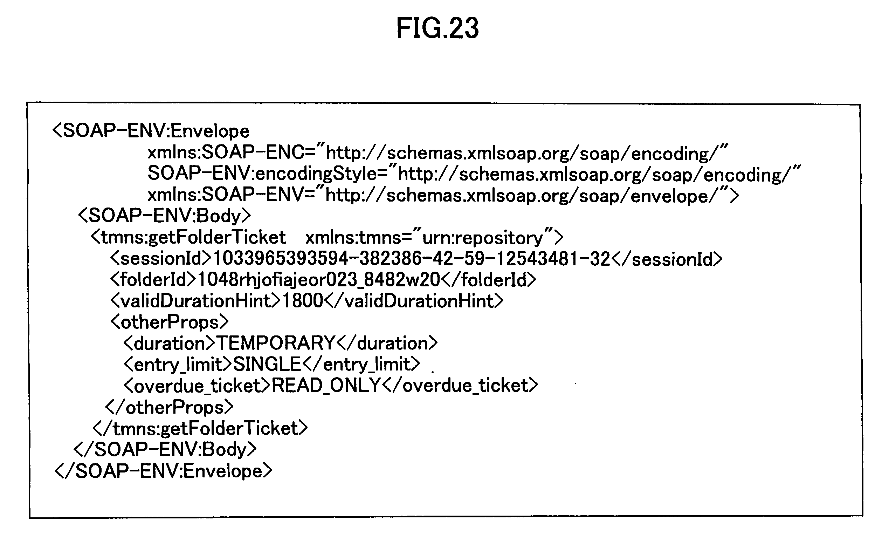

It should be noted that examples where information regarding a time limit of use of the folder ticket and information regarding a number of timed of the folder ticket will be explained later by referring to FIGS. 23, 26, 29, 32, 36, 39, 42 and 45.

A description will now be given, with reference to FIG. 7, of an example of the folder ticket acquisition response. FIG. 7 is an illustration for explaining an example of the folder ticket acquisition response. As shown in FIG. 7, a folder ticket ID is provided between tags <returnValue> and </returnValue> of the folder ticket acquisition response.

A description will now be given, with reference to FIG. 8, of an example of the document storing instruction request. FIG. 8 is an illustration for explaining an example of the document storing instruction request.

As shown in FIG. 8, the folder ticket ID, which the client A acquired by the folder ticket acquisition response of FIG. 7, is provided between tags <ticket> and </ticket> of the document storing instruction request. Additionally, the URL of the document management server 10 is provided between tags <targetUrl> and </targetUrl> of the document storing instruction request.

It should be noted that the document storing instruction request of FIG. 8 is based on the assumption that the client B is a scanner. Additionally, hierarchy information regarding hierarchy of folders may be included in the document storing instruction request of FIG. 8.

A description will now be given, with reference to FIG. 9, of an example of the document storing instruction response. FIG. 9 is an illustration for explaining an example of the document storing instruction response. Upon receipt of the document storing instruction request as shown in FIG. 8 from the client A, the client B sends the document storing instruction response as shown in FIG. 9 to the client A.

A description will be given, with reference to FIG. 10, of an example of the session start request according to a ticket folder. FIG. 10 is an illustration of an example of the session start request according to a folder ticket.

As shown in FIG. 10, the folder ticket ID received from the client A is provided between tags <ticket> and </ticket> of the session start request according to the folder ticket. Additionally, a valid time period of the session according to the folder ticket is provided between tags <timeLimit> and </timeLimit> of the session start request.

A description will now be given, with reference to FIG. 11, of an example of the session according to a folder ticket. FIG. 11 is an illustration for explaining an example of the session according to a folder ticket.

As shown in FIG. 11, the session according to a folder ticket contains a session ID for discriminating the session according to the folder ticket concerned, a folder ticket ID contained in the session start request according to the folder ticket and a valid time period of the session contained in the session start request according to the folder ticket.

It should be noted that although the valid time period of the session according to the folder ticket contained in the session start request according to the folder ticket is provided as a valid time period in FIG. 11, a time of producing the session according to the folder ticket by the document management server 10 based on the session start request according to the folder ticket may be provided. Although a description is not provided, a time of producing the ticket may be provided in the structure of the ticket in other tickets.

A description will now be given, with reference to FIG. 12, of the session start response according to a folder ticket. FIG. 12 is an illustration for explaining an example of the session start response according to a folder ticket. As shown in FIG. 12, the session he session ID which discriminates the session according to a folder ticket is provided between tags <returnValue> and </returnValue> of the session start response according to a folder ticket.

A description will be given, with reference to FIG. 13, of an example of the folder ID acquisition request. FIG. 13 is an illustration for explaining an example of the folder ID acquisition request.

As shown in FIG. 13, the session ID which discriminates the session according to a folder ticket is provided between tags of <sessionId> and </sessionId> of the folder ID acquisition request.
Additionally, the folder ticket ID received from the client A is provided between tags <ticket> and </ticket> of the folder ID acquisition request.

A description will be given, with reference to FIG. 14, of an example of the folder ID acquisition response. FIG. 14 is an illustration for explaining an example of the folder ID acquisition response. As shown in FIG. 14, the folder ID is provided between tags <returnValue> and </returnValue> of the folder ID acquisition response.

A description will be given, with reference to FIG. 15, of an example of the document storing request. FIG. 15 is an illustration for explaining an example of the document storing request.

As shown in FIG. 15, the session ID which discriminates the session according to a folder ticket is provided between tags <sessionId> and </sessionId> of the document storing request. Additionally, the folder ID which discriminates a folder of the document management server 10 is provided between tags <folderId> and </folderId>> of the document storing request. Further, a title of the document stored in the folder discriminated by the folder ID is provided between tags <title> and </title>> of the document storing request. Additionally, an identifier (for example, a user ID, etc.) which discriminates the producer who produced the document is provided between tags <creator> and </creator>> of the document storing request. Moreover, the contents of the document are provided between the tags <content> and </content> of the document storing request.

It should be noted that hierarchy information regarding hierarchy of folders of the document management server 10 may be included in the document storing request shown in FIG. 15. By including the hierarchy information regarding hierarchy of folders of the document management server 10 in the document storing request shown in FIG. 15, the document management server 10 is capable of, for example, producing a subfolder under a designated folder so as to store the document in the subfolder.

A description will be given, with reference to FIG. 16, of an example of the document storing response. FIG. 16 is an illustration for explaining an example of the document storing response. As shown in FIG. 16, the document ID which discriminates the stored document is provided between tags <returnValue> and </returnValue> of the document storing response.

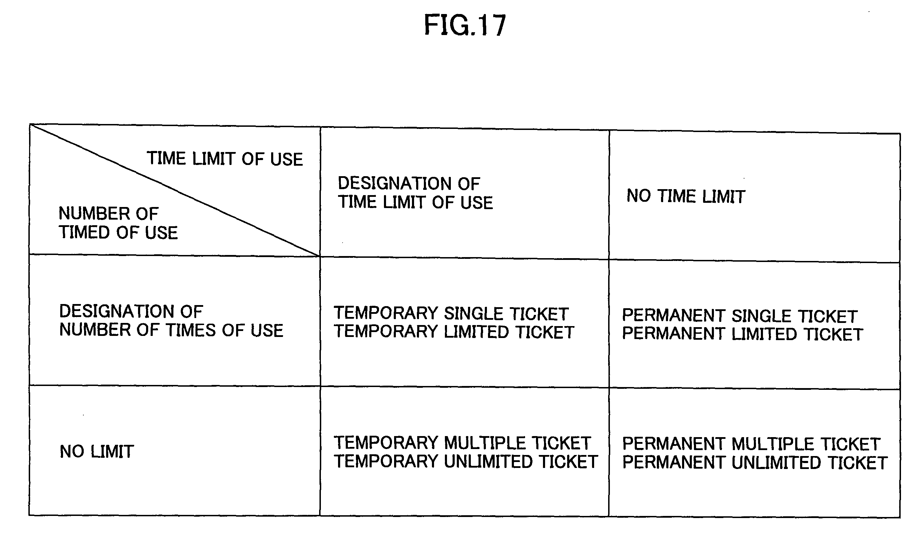

A description will be given, with reference to FIG. 17, of an example of kinds of folder ticket produced in the document management server 10 in accordance with a request by the client A. FIG. 17 is an illustration for explaining an example of kinds of the folder ticket.

As shown in FIG. 17, the folder ticket includes: a temporary single ticket and a temporary limited ticket that provide a limited number of times of use and a time limit of use; a permanent single ticket and a permanent limited ticket that provide a limited number of times of use but no time limit of use; a temporary multiple ticket and a temporary unlimited ticket that provide no limit of number of times of use but a limited time period of use; and a permanent multiple ticket and a permanent unlimited ticket that provide non-limited number of times of use and no time limit of use.

Although the temporary single ticket and the temporary limited ticket provide a highest security among other tickets in operations of the system having the document management server 10, the client A and the client B, etc., it is required to retain resources relating to a folder ticket in the document management server 10 so as to manage a number of times of use and a time limit of use of a ticket folder. Additionally, when a number of times of use and a time limit of use is reached, the client A or client B must acquire another folder ticket.

On the other hand, the permanent single ticket and the permanent limited ticket, which provide limited number of times of use but no time limit of use, provide a low security although they limit a number of times of use. Moreover, in order to manage a number of times of use of a folder ticket, it is required to retain resources relating to the folder ticket in the document management server 10. However, the client A or the client B merely acquires another folder ticket only when the number of times of use is reached, and, thus, these tickets can provide better convenience than the temporary single ticket and the temporary limited ticket.

On the other hand, the temporary multiple ticket and the temporary unlimited time ticket, which provide no limit of number of times of use but limited time period of use, provide a high security since the time period of use is limited although the there is no limit of number of times of use. Additionally, since the client A or the client B merely acquires anther folder ticket only when the time limit of use is reached, they can provide high convenience to users as compared to the temporary single ticket and the temporary limited ticket. However, in order to manage the time limit of use of the folder ticket, it is required to retain resources relating to the folder ticket in the document management server 10. On the other hand, the permanent multiple ticket and the permanent non-limited ticket, which provide no limit of number of times of use and no time limit of use, provide a low security but there is no need to retain resources relating to the folder ticket in the document management server 10.

Moreover, since the client A or the client B is not required to acquire another folder ticket, the level of convenience is highest among other kinds of folder ticket. It should be noted that since the document management server 10 can cancel a folder ticket based on a request from a manager of one of the client A, the client B and the document management server 10, a minimum security of the system can be maintained.

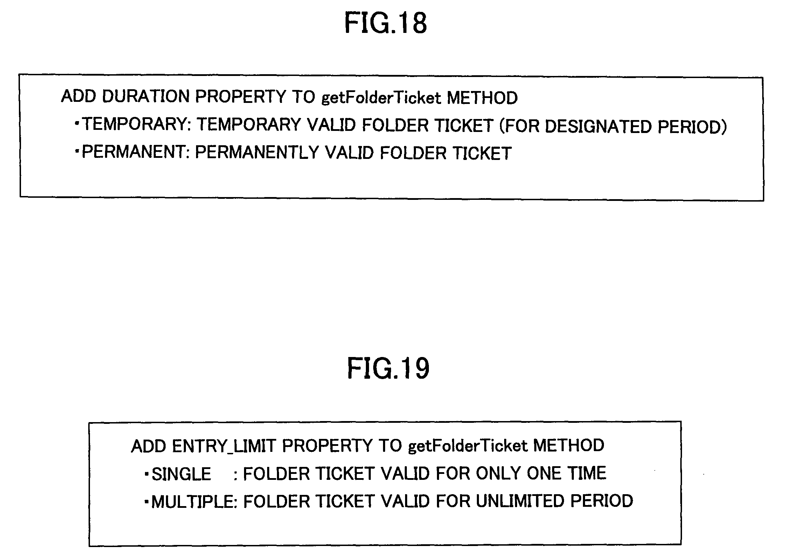

A description will be given below, with reference to FIG. 18, of an example in which the client A designates a time limit of use of a folder ticket. FIG. 18 is an illustration for explaining an example of designating a time limit of use of a folder ticket.

As shown in FIG. 18, the client A adds a DURATION property to the "getFolderTicket" method of the folder ticket acquisition request as shown in FIG. 6. The client A is capable of requesting the document management server 10 to produce a folder ticket that is valid within a temporary time period (or time period designated by the client A by storing "TEMPORARY" in the DURATION property. Moreover, the client A can request the document management server 10 to produce a permanently valid folder ticket by storing "PERMANENT" to the DURATION property.

A description will now be given, with reference to FIG. 19, of an example in which the client A designates a number of times of use of a folder ticket. FIG. 19 is an illustration for explaining designation of number of times of use of a folder ticket.

As shown in FIG. 19, the client A adds an ENTRY_LIMIT property to the "getFolderTicket" method of the folder ticket acquisition request as shown in FIG. 6. By storing SINGLE in the ENTRY_LIMIT property, the client A is capable of requesting the document management apparatus 10 to produce a folder ticket, which is valid for one time use. Moreover, the client A can request the document management server 10 to produce a folder ticket which is valid for any number of times by storing "MULTIPLE" in the ENTRY_LIMIT property.

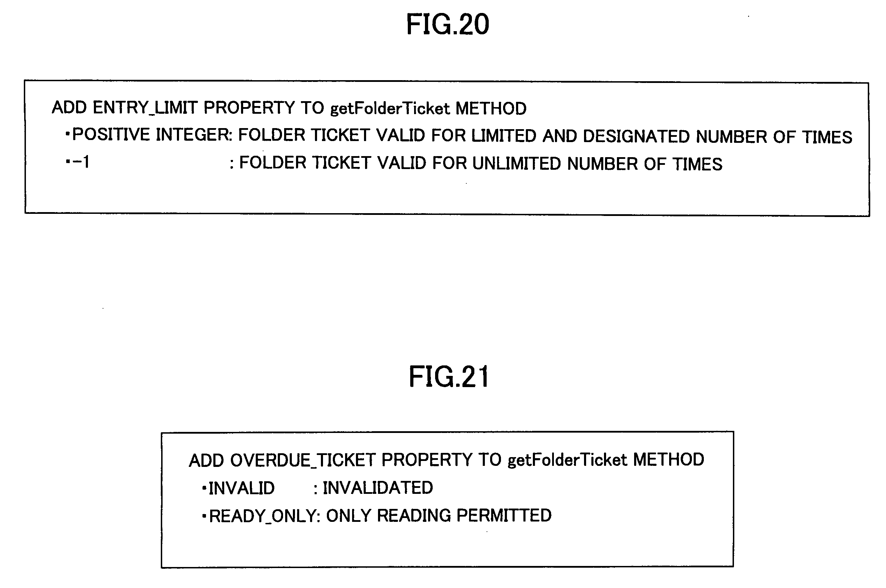

A description will be given, with reference to FIG. 20, of another example in which the client A designates a number of times of use of a folder ticket. FIG. 20 is an illustration for explaining another example of designating a number of times of use of a folder ticket.

As shown in FIG. 20, the client A adds the ENTRY_LIMIT property to the "getFolderTicket" method of the folder ticket acquisition request as shown in FIG. 6. The client A is capable of requesting the document management server 10 to produce a folder ticket which is valid for a limited number of times by storing a positive integer in the ENTRY_LIMIT property. Moreover, the client A can request the document management server 10 to produce a folder ticket which is valid for unlimited number of times by storing "-1" in the ENTRY_LIMIT property.

A description will be given, with reference to FIG. 21, of an example in which the client A designate authority of a folder ticket of which time limit of use or a limit number of times of use is reached. FIG. 21 is an illustration for explaining an example in which the client A designates authority of a folder ticket of which time limit of use or a limit number of times of use is reached.

As shown in FIG. 21, the client A adds the OVERDUE_TICKET property to the "getFolderTicket" method of the folder ticket acquisition request as shown in FIG. 6. The client A is capable of requesting the document management server 10 to produce a folder ticket of which authority is invalidated when a time limit of use or a limited number of times of use is reached by storing "INVALID" in the OVERDUE_TICKET property. Moreover, the client A can request the document management server 10 to produce a folder ticket by which only reading of the document is permitted when a time limit of use or a limited number of times of use is reached by storing "READ_ONLY" in the OVERDUE_TICKET property.

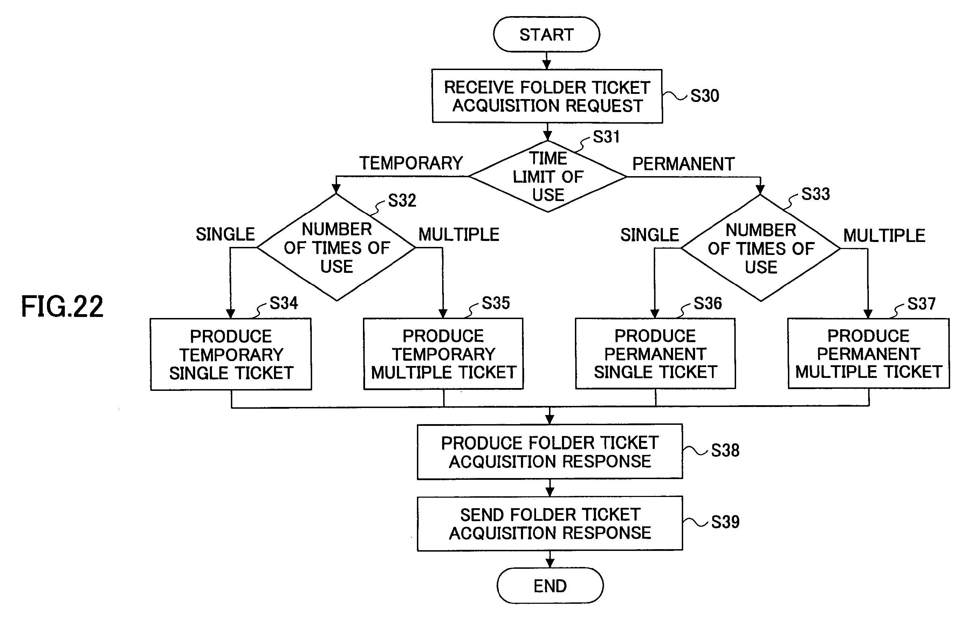

A description will now be given, with reference to FIGS. 22 through 34, of an example of a process in the document management server 10 in a case where "SINGLE" or "MULTIPLE" is stored in the ENTRY_LIMIT property of the "getFolderTicket" method. FIG. 22 is a flowchart (part 1) of a process of producing a folder ticket.

In step S30, the document management server 10 receives from the client A, for example, a folder ticket acquisition request such as shown in FIGS. 23, 26, 29 or 32. Subsequent to step S30, the process proceeds to step S31 in which the document management server 10 determines whether a value provided between the tags <duration> and </duration> contained in the folder ticket acquisition request is "TEMPORARY" or "PERMANENT". If the document management server 10 determines that the value provided between the tags <duration> and </duration> is "TEMPORARY", the process proceeds to step S32. On the other hand, if the document management server 10 determines that the value provided between the tags <duration> and </duration> is "PERMANENT", the process proceeds to step S33.

In step S32, the document management server 10 determines whether the value provided between the tags <entry_limit> and </entry_limit> contained in the folder ticket acquisition request is "SINGLE" or "MULTIPLE". If the document management server 10 determines that the value provided between the tags <entry_limit> and </entry_limit> is "SINGLE", the process proceeds to step S34. On the other hand, if the document management server 10 determines that the value provided between the tags <entry_limit> and </entry_limit> is "MULTIPLE", the process proceeds to step S35.

Moreover, in step S33, the document management server 10 determines whether the value provided between the tags <entry_limit> and </entry_limit> contained in the folder ticket acquisition request is "SINGLE" or "MULTIPLE". If the document management server 10 determines that the value provided between the tags <entry_limit> and </entry_limit> is SINGLE, the process proceeds to step S36. On the other hand, if the document management server 10 determines that the value provided between the tags <entry_limit> and </entry_limit> is MULTIPLE, the process proceeds to step S37.

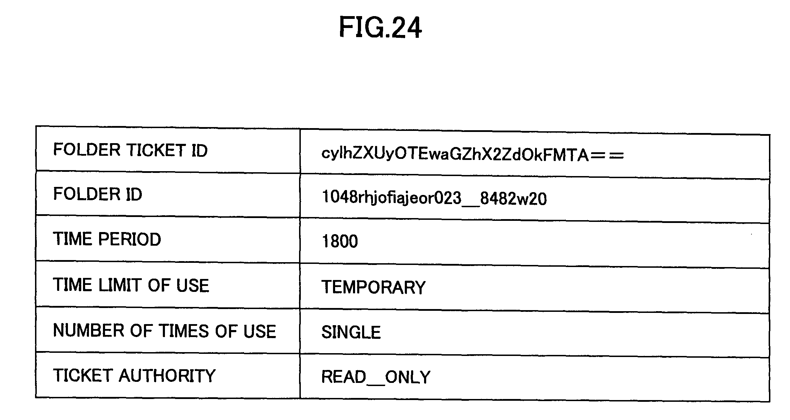

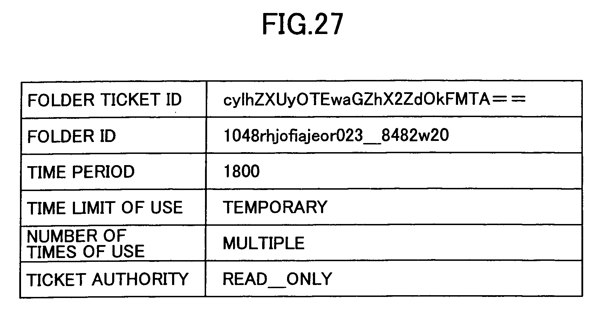

In step S34, the document management server 10 produces a temporary single ticket, which is one of folder tickets such as shown in FIG. 24 mentioned later. Additionally, in step S35, the document management server 10 produces a temporary multiple ticket, which is one of folder tickets such as shown in FIG. 27 mentioned later.

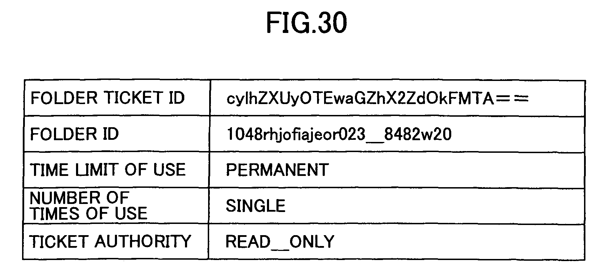

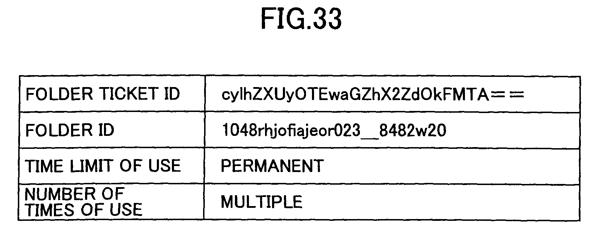

Further, in step S36, the document management server 10 produces a permanent single ticket, which is one of folder tickets such as shown in FIG. 30 mentioned later. Moreover, in step S37, the document management server 10 produces a permanent multiple ticket, which is one of folder tickets such as shown in FIG. 33 mentioned later.

In step S38, the document management server 10 produces the folder ticket acquisition response such as shown in FIG. 7 containing the folder ticket ID, which discriminates the produced folder ticket. Subsequent to step S38, the process proceeds to step S39, the document management server 10 sends the folder ticket acquisition response produced in step S38 to a requester (for example, the client A).

By performing the process shown in FIG. 22, the document management server 10 can produce a corresponding folder ticket according to the folder ticket acquisition request from the client A, for example. Moreover, the document management server 10 can produce the folder ticket acquisition response containing the folder ticket ID, which discriminates the produced the folder ticket, and send it to a requester (for example, the client A).

If the client A, which received the folder ticket acquisition response, transfer the folder ticket ID contained in the folder ticket to, for example, the client B as shown in FIG. 3, the client B can send the session start request according to the folder ticket to the document management server 10 so as to establish a session with the document management server 10 using the folder ticket.

A description will be given, with reference to FIG. 23, of an example of the folder ticket (temporary single ticket) acquisition request. FIG. 23 is an illustration for explaining an example of the folder ticket (temporary single ticket) acquisition request.

As shown in FIG. 23, the folder ID is provided between the tags <folderId> and </folderId> contained in the folder ticket (temporary single ticket) acquisition request as explained with reference to FIG. 6. Moreover, a time period of use of a folder ticket to be produced is provided in a unit of second between the tags <validDurationHint> and </validDurationHint> contained in the folder ticket (temporary single ticket) acquisition request of FIG. 23. Moreover, "TEMPORARY" is provided between the tags <duration> and </duration> contained in the folder ticket (temporary single ticket) acquisition request of FIG. 23. Moreover, "SINGLE" is provided between the tags <entry_limit> and </entry_limit> contained in the folder ticket (temporary single ticket) acquisition request of FIG. 23. Moreover, "READ_ONLY" is provided between the tags between <overdue_ticket> and </overdue_ticket> contained in the folder ticket (temporary single ticket) acquisition request of FIG. 23.

As shown in FIG. 23, the client B, for example, can designate the time limit of the folder ticket (180 seconds in the example of FIG. 23) by providing tag values between <validDurationHint> and </validDurationHint> and between <duration > and </duration>. Moreover, as shown in FIG. 23, the client B, for example, can designate a number of times of use of a folder ticket (one time in the example of FIG. 23) by providing a tag value between the tags <entry_limit> and </entry_limit>. Moreover, as shown in FIG. 23, the client B, for example, can designate authority (reading authority in the example of FIG. 23) of a folder ticket of which time limit of use or a number of times of use is reached by providing a tag value between the tags <overdue_ticket> and </overdue_ticket>.

A description will be given, with reference to FIG. 24, of an example of the folder ticket which the document management server 10 produces based on the folder ticket (temporary single ticket) acquisition request. FIG. 24 is an illustration for explaining an example of the folder ticket (temporary single ticket).

As shown in FIG. 24, the folder ticket (temporary single ticket) includes: the folder ticket ID which discriminates the folder ticket (temporary single ticket); the folder ID which discriminates a folder of which use is permitted by the folder ticket (temporary single ticket), that is, the value provided between the tags <folderId> and </folderId> of the folder ticket (temporary single ticket) acquisition request as a result in the example of FIG. 24; the time limit of use of the folder ticket, that is, the value provided between the tags <validDurationHint> and </validDurationHint> of the folder ticket (temporary single ticket) acquisition request as a result in the example of FIG. 24; the value provided between the tags <duration> and </duration> of the folder ticket (temporary single ticket) acquisition request; the value provided between the tags <entry_limit> and </entry_limit> of the folder ticket (temporary single ticket) acquisition request; and the value provided between the tags <overdue_ticket> and </overdue_ticket> of the folder ticket (temporary single ticket) acquisition request.

It should be noted that, although not illustrated in FIG. 24, a number of times of use thus far (that is, for example, a value initially set to 0 and incremented by one when it is used one time) may be provided to the folder ticket shown in FIG. 24.

In the following description, it is assumed, for the sake of simplification, that folder ticket (temporary single ticket) contains a current number of times of use. The document management server 10 retains and manages the folder ticket (temporary single ticket) as shown in FIG. 24.

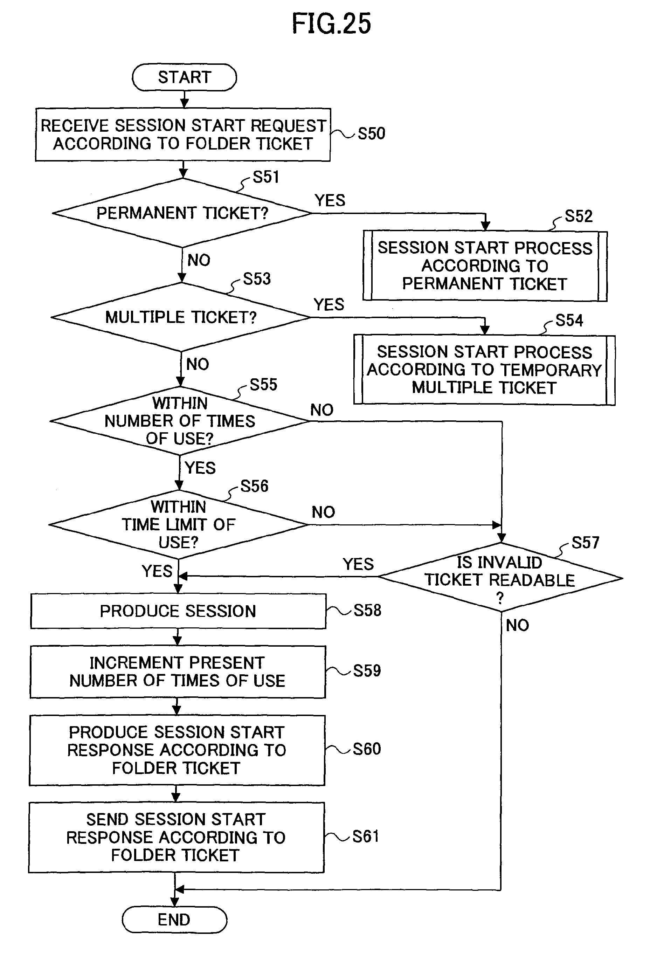

A description will be given below, with reference to FIG. 25, of an example of a session start according to the folder ticket (temporary single ticket). FIG. 25 is a flowchart of a session start process according to a folder ticket (temporary single ticket).

In step S50, the document management server 10 receives from the client B, for example, a session start request according to the folder ticket as shown in FIG. 10. Subsequent to step S50, the process proceeds to step S51 where the document management server 10 determines whether or not the folder ticket is a permanent ticket by referring to the folder ticket (temporary single ticket) based on the folder ticket ID contained in the session start request according to the folder ticket.

It should be noted that the permanent ticket means a ticket containing "PERMANENT" as a time limit of use. This applies through the description below.

If the document management server 10 determines that the folder ticket is a permanent ticket (YES of step S51), the process proceeds to step S52. On the other hand, if the document management server 10 determines that the folder ticket is not a permanent ticket (NO of step S51), the process proceeds to step S53. In step S52, the document management server 10 performs a session start process according to the permanent ticket.

On the other hand, in step S53, the document management server 10 determines whether or not the folder ticket is a multiple ticket by referring to the corresponding folder ticket (temporary single ticket) based on the folder ticket ID contained in the session start request according to the folder ticket.

It should be noted that the multiple ticket mans a ticket containing "MULTIPLE" as a number of times of use. This applies through the following description.

If the document management server 10 determines that the folder ticket is a multiple ticket (YES of step S53), the process proceeds to step S54. If the document management server 10 determines that the folder ticket is not a multiple ticket (NO of step S53), the process proceeds to step S55.

In step S54, the document management server 10 performs a session start process according to the temporary multiple ticket. On the other hand, in step S55, the document management server 10 determines whether or not the present number of times of use of the folder ticket (temporary single ticket) is within a valid number of times of use by referring to the folder ticket (temporary single ticket) based on the folder ticket ID contained in the session start request according to the folder ticket. If the document management server 10 determines that the present number of times of use is within the valid number of times of use, that is, the present number of times of use is 0 in the example of FIG. 25 (YES of step S55), the process proceeds to step S56. On the other hand, if the document management server 10 determines that the present number of times of use is not within the valid number of time of use, that is, the present number of times of use is equal to or greater than 1 in the example of FIG. 25 (NO of step S55), the process proceeds to step S57.

In step S56, the document management server 10 determines whether or not the present time is within the valid time limit by referring to the corresponding folder ticket (temporary single ticket) based on the folder ticket ID contained in the session start request according to the folder ticket. If the document management server 10 determines that the present time is within the valid limit time (YES of step S56), the process proceeds to step S58. On the other hand, if the document management server 10 determines that the present time is not within the valid limit time (NO of step S56), the process proceeds to step S57.

In step S57, the document management server 10 determines whether or not "READ_ONLY" is contained as authority of the folder ticket of which time limit of use or a number of times of use is reached in the folder ticket by referring to the corresponding folder ticket (temporary single ticket) based on the folder ticket ID contained in the session start request according to the folder ticket. If the document management server 10 determines that "READ_ONLY" is contained in the folder ticket (YES of step S57), the process proceeds to step S58. On the other hand, if the document management server 10 determines that "READ_ONLY" is not contained in the folder ticket (NO of step S57), the process is ended.

On the other hand, in step S58, the document management server 10 produces the session according to the folder ticket as shown in FIG. 11.

It should be noted that if it is determined, in step S57, that "READ_ONLY" is contained in the folder ticket (temporary single ticket) and the process proceeds to step S58, a session containing "READ_ONLY" as authority of the session in the session such as shown in FIG. 11 may be produced since it is necessary to produce, in step S58, a session of which authority is limited such that only document reading is permitted.

Subsequent to step S58, the process proceeds to S59 where the document management server 10 increments the present number of times of use contained in the corresponding folder ticket (temporary single ticket) based on the folder ticket ID contained in the session start request according to the folder ticket.

Subsequent to step S59, the process proceeds to step S60 where the document management server 10 produces the session start response according to the folder ticket such as shown in FIG. 12.

Subsequent to step S60, the process proceeds to step S61 where the document management server 10 sends the session start response produced in step S60 to the requester (for example, the client B).

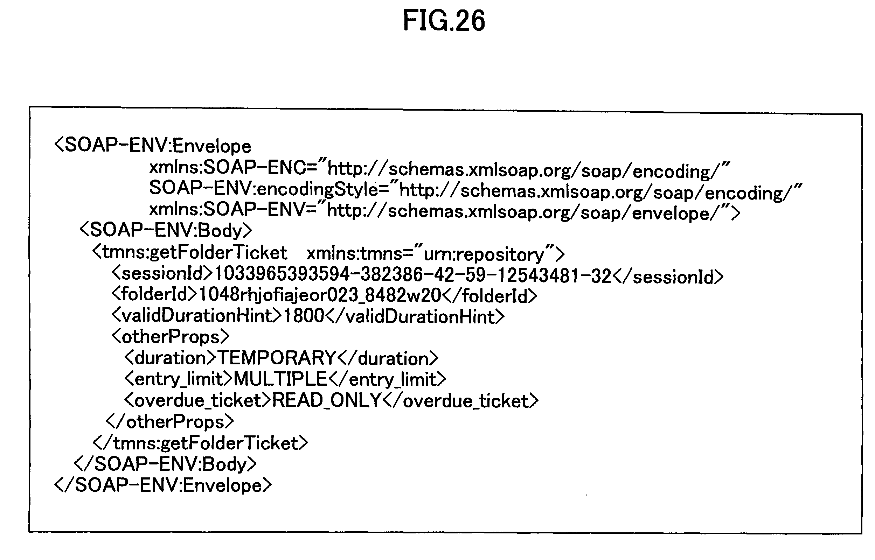

A description will now be given, with reference to FIG. 26, of an example of the folder ticket (temporary multiple ticket) acquisition request. FIG. 26 is an illustration for explaining an example of the folder ticket (temporary multiple ticket) acquisition request.

As shown in FIG. 26, the folder ID is provided between the tags <folderId> and </folderId> contained in the folder ticket (temporary time multiple ticket) acquisition request as explained with reference to FIG. 6. Moreover, the time limit of use of the folder to be produced is provided in a unit of second between the tags <validDurationHint> and </validDurationHint> contained in the folder ticket (temporary multiple ticket) acquisition request of FIG. 26.

Moreover, "TEMPORARY" is provided between the tags <duration> and </duration> contained in the folder ticket (temporary multiple ticket) acquisition request of FIG. 26. Moreover, "MULTIPLE" is provided between the tags <entry_limit> and </entry_limit> contained in the folder ticket (temporary multiple ticket) acquisition request of FIG. 26. Moreover, "READ_ONLY" is provided between the tags <overdue_ticket> and </overdue_ticket> contained in the folder ticket (temporary multiple ticket) acquisition request of FIG. 26.

As shown in FIG. 26, the client B, for example, can designate the valid time period of the folder ticket (1800 seconds in the example of FIG. 26) by providing values between the tags <validDurationHint> and </validDurationHint> and between the tags <duration> and </duration>. Moreover, as shown in FIG. 26, the client B can designate a number of times of use of the folder ticket (unlimited in the example of FIG. 26) by providing a value between the tags <entry_limit> and </entry_limit>. Moreover, as shown in FIG. 26, the client B can designate authority (reading authority in the example of FIG. 26) of the folder ticket of which time limit is reached by providing a value between the tags <overdue_ticket> and </overdue_ticket>.

A description will now be given, with reference to FIG. 27, of an example of the folder ticket which the document management server 10 produced based on the folder ticket (temporary multiple ticket) acquisition request of FIG. 26. FIG. 27 is an illustration for explaining an example of the folder ticket (temporary multiple ticket).

As shown in FIG. 27, the folder ticket (temporary multiple ticket) includes: the folder ticket ID which discriminates the folder ticket (temporary multiple ticket); the folder ID which discriminates a folder of which use is permitted by the folder ticket (temporary multiple ticket), that is, the value provided between the tags <folderId> and </folderId> of the folder ticket (temporary multiple ticket) acquisition request as a result in the example of FIG. 27; the time limit of use of the folder ticket, that is, the value provided between the tags <validDurationHint> and </validDurationHint> of the folder ticket (temporary multiple ticket) acquisition request as a result in the example of FIG. 27; the value provided between the tags <duration> and </duration> of the folder ticket (temporary multiple ticket) acquisition request; the value provided between the tags <entry_limit> and </entry_limit> of the folder ticket (temporary multiple ticket) acquisition request; and the value provided between the tags <overdue_ticket> and </overdue_ticket> of the folder ticket (temporary multiple ticket) acquisition request.

The document management server 10 retains and manages the folder ticket (temporary multiple ticket) such as shown in FIG. 27.

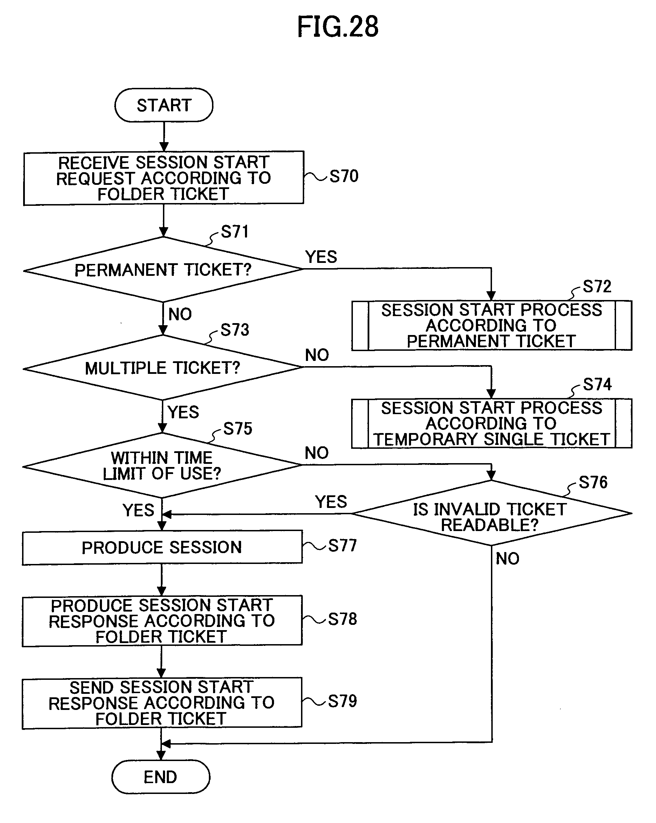

A description will be given, with reference to FIG. 28, of an example of a session start process according to the folder ticket (temporary multiple ticket). FIG. 28 is a flowchart for explaining an example of a session start process according to the folder ticket (temporary multiple ticket).

In step S70, the document management server 10 receives from the client B, for example, a session start request according to the folder ticket as shown in FIG. 10. Subsequent to step S70, the process proceeds to step S71 where the document management server 10 determines whether or not the folder ticket is a permanent ticket by referring to the folder ticket (temporary single ticket) based on the folder ticket ID contained in the session start request according to the folder ticket.

If the document management server 10 determines that the folder ticket is a permanent ticket (YES of step S71), the process proceeds to step S72. On the other hand, if the document management server 10 determines that the folder ticket is not a permanent ticket (NO of step S71), the process proceeds to step S73. In step S72, the document management server 10 performs a session start process according to the permanent ticket. On the other hand, in step S73, the document management server 10 determines whether or not the folder ticket is a multiple ticket by referring to the corresponding folder ticket (temporary multiple ticket) based on the folder ticket ID contained in the session start request according to the folder ticket.

If the document management server 10 determines that the folder ticket is a multiple ticket (YES of step S73), the process proceeds to step S75. If the document management server 10 determines that the folder ticket is not a multiple ticket (NO of step S73), the process proceeds to step S74. In step S74, the document management server 10 performs a process from the step S55 of FIG. 25.

On the other hand, in step S75, the document management server 10 determines whether or not the present time is within a valid time period by referring to the folder ticket (temporary multiple ticket) based on the folder ticket ID contained in the session start request according to the folder ticket.

If the document management server 10 determines that the present time is within the valid time period (YES of step S75), the process proceeds to step S77. On the other hand, if the document management server 10 determines that the present time is within the valid time period (NO of step S75), the process proceeds to step S76. In step S76, the document management server 10 determines whether or not "READ_ONLY" is contained as authority of the folder ticket of which time limit of use is reached in the folder ticket by referring to the corresponding folder ticket (temporary multiple ticket) based on the folder ticket ID contained in the session start request according to the folder ticket.

If the document management server 10 determines that "READ_ONLY" is contained in the folder ticket (YES of step S76), the process proceeds to step S77. On the other hand, if the document management server 10 determines that "READ_ONLY" is not contained in the folder ticket (NO of step S76), the process is ended. On the other hand, in step S77, the document management server 10 produces the session according to the folder ticket as shown in FIG. 11.

It should be noted that if it is determined, in step S76, that "READ_ONLY" is contained in the folder ticket (temporary multiple ticket) and the process proceeds to step S77, a session containing "READ_ONLY" as authority of the session in the session such as shown in FIG. 11 may be produced since it is necessary to produce, in step S77, a session of which authority is limited such that only document reading is permitted.

Subsequent to step S77, the process proceeds to S78 where the document management server 10 produces the session start response according to the folder ticket such as shown in FIG. 12. Subsequent to step S78, the process proceeds to step S79 where the document management server 10 sends the session start response produced in step S78 to the requester (for example, the client B).

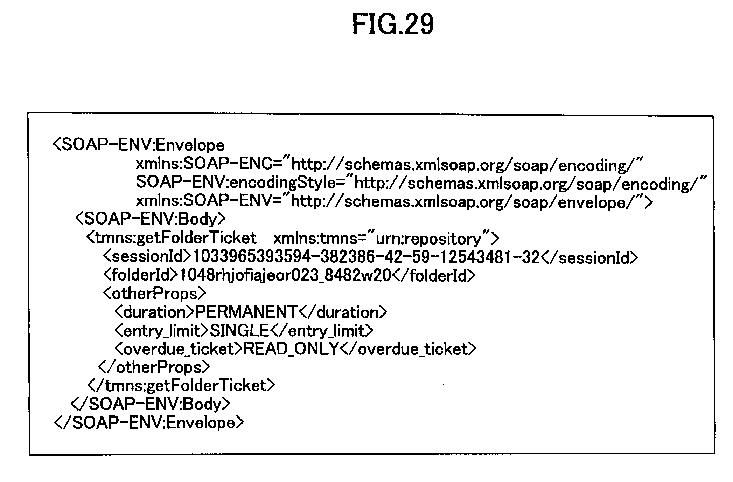

A description will now be given, with reference to FIG. 29, of an example of the folder ticket (permanent single ticket) acquisition request. FIG. 29 is an illustration for explaining an example of the folder ticket (permanent single ticket) acquisition request.

As shown in FIG. 29, the folder ID is provided between the tags <folderId> and </folderId> contained in the folder ticket (permanent single ticket) acquisition request as explained with reference to FIG. 6. Moreover, "PERMANENT" is provided between the tags <duration> and </duration> contained in the folder ticket (permanent single ticket) acquisition request of FIG. 29. Moreover, "SINGLE" is provided between the tags <entry_limit> and </entry_limit> contained in the folder ticket (permanent single ticket) acquisition request of FIG. 29. Moreover, "READ_ONLY" is provided between the tags <overdue_ticket> and </overdue_ticket> contained in the folder ticket (permanent single ticket) acquisition request of FIG. 29.

As shown in FIG. 29, the client B, for example, can designate the valid time period of the folder ticket (permanent in the example of FIG. 29) by providing a value between the tags <duration> and </duration>. Moreover, as shown in FIG. 29, the client B can designate a number of times of use of the folder ticket (one time in the example of FIG. 29) by providing a value between the tags <entry_limit> and </entry_limit>. Moreover, as shown in FIG. 29, the client B can designate authority (reading authority in the example of FIG. 29) of the folder ticket of which the limited number of times of use is reached by providing a value between the tags <overdue_ticket> and </overdue_ticket>.

A description will now be given, with reference to FIG. 30, of an example of a folder ticket (permanent single ticket), which the document management server 10 produced, based on the folder ticket (permanent single ticket acquisition request of FIG. 29. FIG. 30 is an illustration for explaining an example of a folder ticket (permanent single ticket).

As shown in FIG. 30, the folder ticket (permanent single ticket) includes: a folder ticket ID, which discriminates the folder ticket (permanent single ticket); a folder ID, which discriminates the folder, which the folder ticket (permanent single ticket) permits use thereof; the value provided between the tags <folderId> and </folderId> of the folder ticket (permanent single ticket) acquisition request as a result in the example of FIG. 30; the value provided between the tags <duration> and <duration> of the folder ticket (permanent single ticket) acquisition request; the value provided between the tags <entry_limit> and </entry_limit> of the folder ticket (permanent single ticket) acquisition request; and the value provided between the tags <overdue_ticket> and </overdue_ticket> of the folder ticket (temporary single ticket) acquisition request.

It should be noted that, although not illustrated in FIG. 30, a number of times of use thus far (that is, for example, a value initially set to 0 and incremented by one when it is used one time) may be provided to the folder ticket shown in FIG. 30. In the following description, it is assumed, for the sake of simplification, that folder ticket (permanent single ticket) contains a current number of times of use. The document management server 10 retains and manages the folder ticket (permanent single ticket) as shown in FIG. 30.

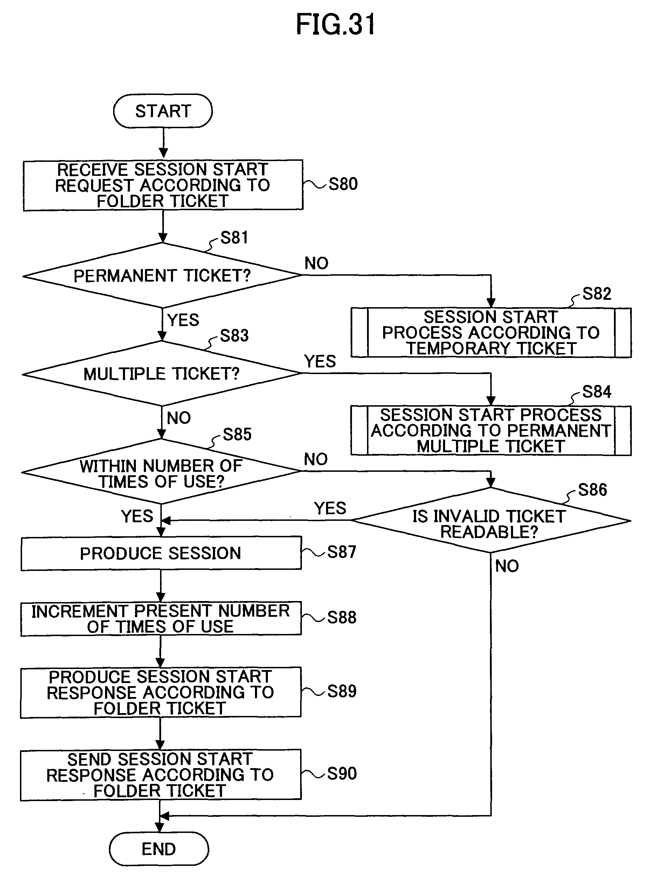

A description will be given below, with reference to FIG. 31, of an example of a session start according to the folder ticket (permanent single ticket). FIG. 31 is a flowchart of a session start process according to the folder ticket (permanent single ticket).

In step S80, the document management server 10 receives from the client B, for example, a session start request according to the folder ticket as shown in FIG. 10. Subsequent to step S80, the process proceeds to step S81 where the document management server 10 determines whether or not the folder ticket is a permanent ticket by referring to the folder ticket (permanent single ticket) based on the folder ticket ID contained in the session start request according to the folder ticket.

If the document management server 10 determines that the folder ticket is a permanent ticket (YES of step S81), the process proceeds to step S83. On the other hand, if the document management server 10 determines that the folder ticket is not a permanent ticket (NO of step S81), the process proceeds to step S82. In step S82, the document management server 10 performs a session start process according to a temporary ticket.

It should be noted that the temporary ticket means a folder ticket containing "TEMPORARY" as a time limit of use. This also applies to examples mentioned below.

On the other hand, in step S83, the document management server 10 determines whether or not the folder ticket is a multiple ticket by referring to the corresponding folder ticket (permanent single ticket) based on the folder ticket ID contained in the session start request according to the folder ticket.

If the document management server 10 determines that the ticket is a multiple ticket (YES of step S83), the process proceeds to step S84. On the other hand, if the document management server 10 determines that the ticket is not a multiple ticket (NO of step S83), the process proceeds to step S85.

In step S84, the document management server 10 performs a session start process according to the permanent multiple ticket. On the other hand, in step S85, the document management server 10 determines whether or not the present number of times of use of the folder ticket (permanent single ticket) by referring to the folder ticket (permanent single ticket) based on the folder ticket ID contained in the session start request according to the folder ticket. If the document management server 10 determines that the present number of times of use is within the valid number of times of use, that is, the present number of times of use is 0 in the example of FIG. 31 (YES of step S85), the process proceeds to step S87. On the other hand, if the document management server 10 determines that the present number of times of use is not within the valid number of time of use, that is, the present number of times of use is equal to or greater than 1 in the example of FIG. 22 (NO of step S85), the process proceeds to step S86.

In step S86, the document management server 10 determines whether or not "READ_ONLY" is contained as authority of the folder ticket of which time limit of use or a number of times of use is reached in the folder ticket by referring to the corresponding folder ticket (permanent single ticket) based on the folder ticket ID contained in the session start request according to the folder ticket.

If the document management server 10 determines that "READ_ONLY" is contained in the folder ticket (YES of step S86), the process proceeds to step S87. On the other hand, if the document management server 10 determines that "READ_ONLY" is not contained in the folder ticket (NO of step S86), the process is ended. On the other hand, in step S87, the document management server 10 produces the session according to the folder ticket as shown in FIG. 11.

It should be noted that if it is determined, in step S86, that "READ_ONLY" is contained in the folder ticket (permanent single ticket) and the process proceeds to step S87, a session containing "READ_ONLY" as authority of the session in the session such as shown in FIG. 11 may be produced since it is necessary to produce, in step S87, a session of which authority is limited such that only document reading is permitted.

Subsequent to step S87, the process proceeds to S88 where the document management server 10 increments the present number of times of use contained in the corresponding folder ticket (permanent single ticket) based on the folder ticket ID contained in the session start request according to the folder ticket.

Subsequent to step S88, the process proceeds to step S89 where the document management server 10 produces the session start response according to the folder ticket such as shown in FIG. 12.

Subsequent to step S89, the process proceeds to step S90 where the document management server 10 sends the session start response produced in step S89 to the requester (for example, the client B).

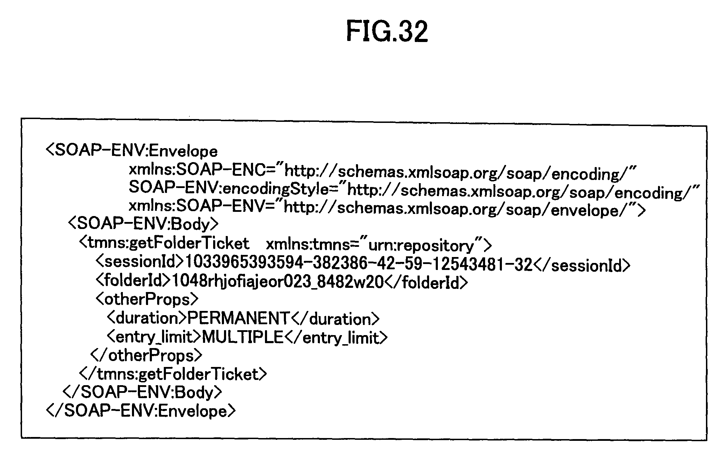

A description will now be given, with reference to FIG. 32, of an example of the folder ticket (permanent multiple ticket) acquisition request. FIG. 32 is an illustration for explaining an example of the folder ticket (permanent multiple ticket) acquisition request.

As shown in FIG. 32, the folder ID is provided between the tags <folderId> and </folderId> contained in the folder ticket (permanent multiple ticket) acquisition request as explained with reference to FIG. 6. Moreover, "PERMANENT" is provided between the tags <duration> and </duration> contained in the folder ticket (permanent multiple ticket) acquisition request of FIG. 32. Moreover, "MULTIPLE" is provided between the tags <entry_limit> and </entry_limit> contained in the folder ticket (permanent multiple ticket) acquisition request of FIG. 32.

As shown in FIG. 32, the client B can designate a time limit of use of the folder ticket (permanent in the example of FIG. 32) by providing a value between the tags <duration> and </duration>. Moreover, as shown in FIG. 32, the client B can designate a number of times of use of the folder ticket (unlimited times in the example of FIG. 32) by providing a value between the tags <entry_limit> and </entry_limit>.

A description will now be given, with reference to FIG. 33, of an example of the folder ticket which the document management server 10 produced based on the folder ticket (permanent multiple ticket) acquisition request of FIG. 32. FIG. 33 is an illustration for explaining an example of the folder ticket (permanent multiple ticket).

As shown in FIG. 33, the folder ticket (permanent multiple ticket) includes: the folder ticket ID which discriminates the folder ticket (permanent multiple ticket); the folder ID which discriminates a folder of which use is permitted by the folder ticket (permanent multiple ticket), that is, the value provided between the tags <folderId> and </folderId> of the folder ticket (permanent multiple ticket) acquisition request as a result in the example of FIG. 33; the value provided between the tags <duration> and </duration> of the folder ticket (permanent multiple ticket) acquisition request; and the value provided between the tags <entry_limit> and </entry_limit> of the folder ticket (permanent multiple ticket) acquisition request.

The document management server 10 retains and manages the folder ticket (permanent multiple ticket) such as shown in FIG. 33.

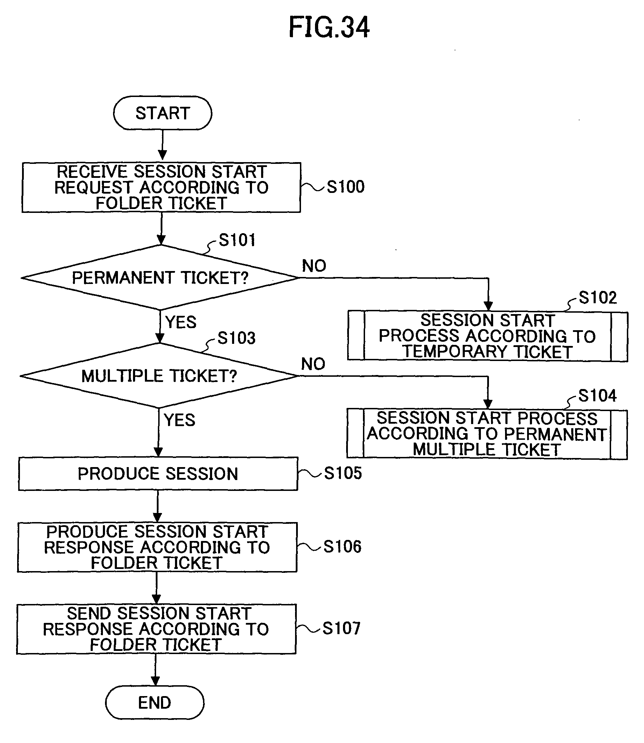

A description will be given, with reference to FIG. 34, of an example of a session start process according to the folder ticket (permanent multiple ticket). FIG. 34 is a flowchart for explaining an example of a session start process according to the folder ticket (permanent multiple ticket).

In step S100, the document management server 10 receives from the client B, for example, a session start request according to the folder ticket as shown in FIG. 10. Subsequent to step S100, the process proceeds to step S101 where the document management server 10 determines whether or not the folder ticket is a permanent ticket by referring to the folder ticket (permanent multiple ticket) based on the folder ticket ID contained in the session start request according to the folder ticket.

If the document management server 10 determines that the folder ticket is a permanent ticket (YES of step S101, the process proceeds to step S103. On the other hand, if the document management server 10 determines that the folder ticket is not a permanent ticket (NO of step S101), the process proceeds to step S102. In step S102, the document management server 10 performs a session start process according to a temporary ticket.

On the other hand, in step S103, the document management server 10 determines whether or not the folder ticket is a multiple ticket by referring to the corresponding folder ticket (permanent multiple ticket) based on the folder ticket ID contained in the session start request according to the folder ticket. If the document management server 10 determines that the folder ticket is a multiple ticket (YES of step S103), the process proceeds to step S105. If the document management server 10 determines that the folder ticket is not a multiple ticket (NO of step S103), the process proceeds to step S104.

In step S104, the document management server 10 performs a process from the step S85 of FIG. 31. On the other hand, in step S105, the document management server 10 produces the session according to the folder ticket as shown in FIG. 11.

Subsequent to step S105, the process proceeds to S106 where the document management server 10 produces the session start response according to the folder ticket such as shown in FIG. 12.

Subsequent to step S106, the process proceeds to step S107 where the document management server 10 sends the session start response produced in step S107 to the requester (for example, the client B).

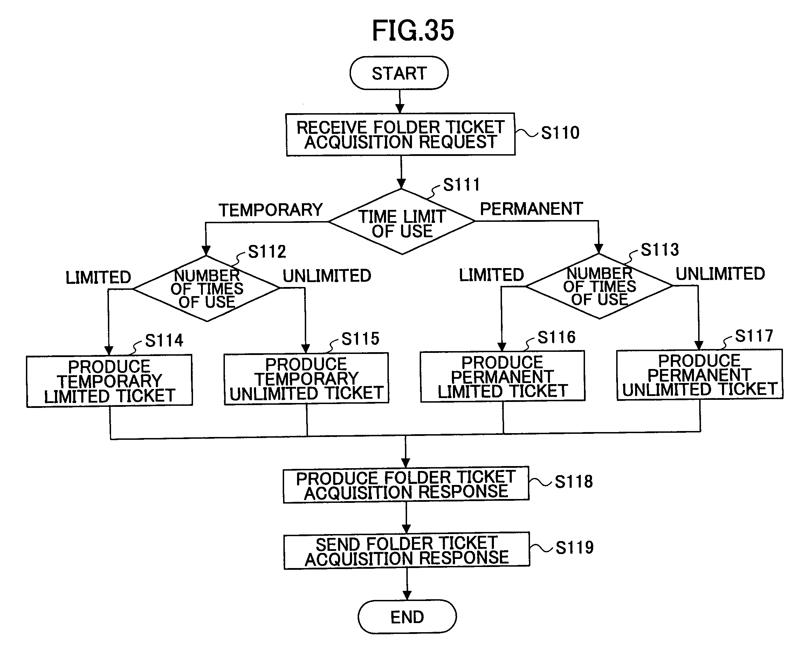

A description will now be given, with reference to FIGS. 35 through 47, of an example of a process performed in the document management server 10 in accordance with an example where a positive integer or -1 is provided in the property of ENTRY_LIMIT of the "getFolderTicket" method. FIG. 35 is a flowchart (part 2) for explaining a folder ticket production process.

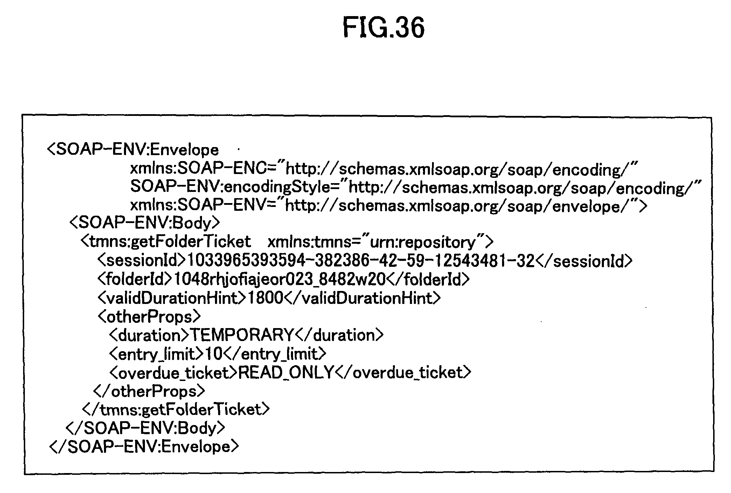

In step S110, the document management server 10 receives a folder ticket acquisition request such as shown in FIG. 36 or FIG. 39, 42 or 45 mentioned later.

Subsequent to step S110, the process proceeds to step S111 in which the document management server 10 determines whether a value provided between the tags <duration> and </duration> contained in the folder ticket acquisition request is "TEMPORARY" or "PERMANENT". If the document management server 10 determines that the value provided between the tags <duration> and </duration> is "TEMPORARY", the process proceeds to step S112. On the other hand, if the document management server 10 determines that the value provided between the tags <duration> and </duration> is "PERMANENT", the process proceeds to step S113.

In step S112, the document management server 10 determines whether the value provided between the tags <entry_limit> and </entry_limit> contained in the folder ticket acquisition request is a positive integer (limited) or -1 (unlimited). If the document management server 10 determines that the value provided between the tags <entry_limit> and </entry_limit> is a positive integer (limited), the process proceeds to step S114. On the other hand, if the document management server 10 determines that the value provided between the tags <entry_limit> and </entry_limit> is -1 (unlimited), the process proceeds to step S115.

Moreover, in step S133, the document management server 10 determines whether the value provided between the tags <entry_limit> and </entry_limit> contained in the folder ticket acquisition request is a positive integer (limited) or "-1" (unlimited). If the document management server 10 determines that the value provided between the tags <entry_limit> and </entry_limit> is a positive integer (limited), the process proceeds to step S116. On the other hand, if the document management server 10 determines that the value provided between the tags <entry_limit> and </entry_limit> is "-1" (unlimited), the process proceeds to step S117.

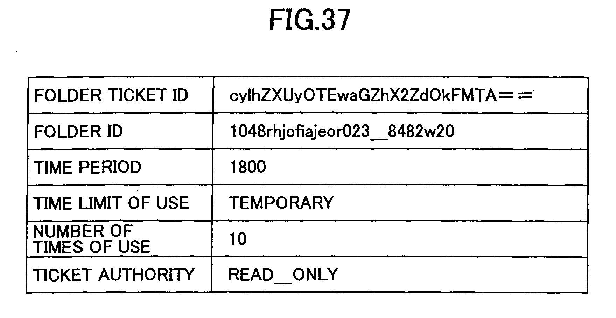

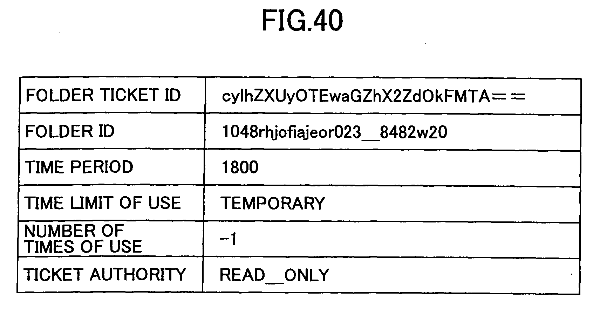

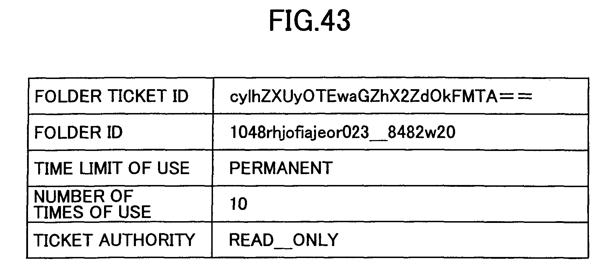

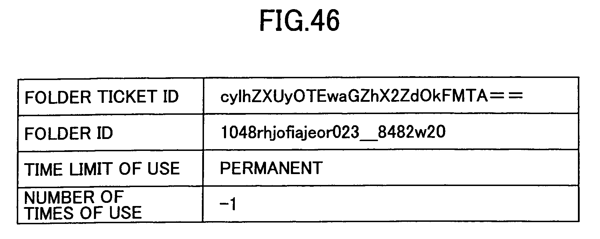

In step S114, the document management server 10 produces a temporary limited ticket, which is one of folder tickets such as shown in FIG. 37 mentioned later. Additionally, in step S115, the document management server 10 produces a temporary limited ticket, which is one of folder tickets such as shown in FIG. 40 mentioned later. Further, in step S116, the document management server 10 produces a permanent limited ticket, which is one of folder tickets such as shown in FIG. 43 mentioned later. Moreover, in step S117, the document management server 10 produces a permanent limited ticket, which is one of folder tickets such as shown in FIG. 46 mentioned later.

In step S118, the document management server 10 produces the folder ticket acquisition response such as shown in FIG. 7 containing the folder ticket ID, which discriminates the produced folder ticket. Subsequent to step S118, the process proceeds to step S119, the document management server 10 sends the folder ticket acquisition response produced in step S118 to a requester (for example, the client A).

By performing the process shown in FIG. 35, the document management server 10 can produce a corresponding folder ticket according to the folder ticket acquisition request from the client A, for example. Moreover, the document management server 10 can produce the folder ticket acquisition response containing the folder ticket ID, which discriminates the produced folder ticket, and send it to a requester (for example, the client A).

If the client A, which received the folder ticket acquisition response, transfer the folder ticket ID contained in the folder ticket to, for example, the client B as shown in FIG. 3, the client B can send the session start request according to the folder ticket to the document management server 10 so as to establish a session with the document management server 10 using the folder ticket.

A description will be given, with reference to FIG. 36, of an example of the folder ticket (temporary limited ticket) acquisition request. FIG. 36 is an illustration for explaining an example of the folder ticket (temporary limited ticket) acquisition request.

As shown in FIG. 36, the folder ID is provided between the tags <folderId> and </folderId> contained in the folder ticket (temporary limited ticket) acquisition request as explained with reference to FIG. 6. Moreover, a time period of use of a folder ticket to be produced is provided in a unit of second between the tags <validDurationHint> and </validDurationHint> contained in the folder ticket (temporary limited ticket) acquisition request of FIG. 36. Moreover, "TEMPORARY" is provided between the tags <duration> and </duration> contained in the folder ticket (temporary limited ticket) acquisition request of FIG. 36. Moreover, "10" is provided between the tags <entry_limit> and </entry_limit> contained in the folder ticket (temporary limited ticket) acquisition request of FIG. 36. Moreover, "READ_ONLY" is provided between the tags between <overdue_ticket> and </overdue_ticket> contained in the folder ticket (temporary limited ticket) acquisition request of FIG. 36.

As shown in FIG. 36, the client B, for example, can designate the time limit of the folder ticket (180 seconds in the example of FIG. 36) by providing tag values between <validDurationHint> and </validDurationHint> and between <duration > and </duration>. Moreover, as shown in FIG. 36, the client B, for example, can designate a number of times of use of a folder ticket (10 times in the example of FIG. 36) by providing a tag value between the tags <entry_limit> and </entry_limit>. Moreover, as shown in FIG. 36, the client B, for example, can designate authority (reading authority in the example of FIG. 36) of a folder ticket of which time limit of use or a number of times of use is reached by providing a tag value between the tags <overdue_ticket> and </overdue_ticket>.

A description will be given, with reference to FIG. 37, of an example of the folder ticket which the document management server 10 produces based on the folder ticket (temporary limited ticket) acquisition request of FIG. 36. FIG. 37 is an illustration for explaining an example of the folder ticket (temporary single ticket) .

As shown in FIG. 24, the folder ticket (temporary single ticket) includes: the folder ticket ID which discriminates the folder ticket (temporary limited ticket); the folder ID which discriminates a folder of which use is permitted by the folder ticket (temporary limited ticket), that is, the value provided between the tags <folderId> and </folderId> of the folder ticket (temporary single ticket) acquisition request as a result in the example of FIG. 27; the time limit of use of the folder ticket, that is, the value provided between the tags <validDurationHint> and </validDurationHint> of the folder ticket (temporary single ticket) acquisition request as a result in the example of FIG. 37; the value provided between the tags <duration> and </duration> of the folder ticket (temporary limited ticket) acquisition request; the value provided between the tags <entry_limit> and </entry_limit> of the folder ticket (temporary limited ticket) acquisition request; and the value provided between the tags <overdue_ticket> and </overdue_ticket> of the folder ticket (temporary limited ticket) acquisition request.

It should be noted that, although not illustrated in FIG. 37, a number of times of use thus far (that is, for example, a value initially set to 0 and incremented by one when it is used one time) may be provided to the folder ticket shown in FIG. 37.

In the following description, it is assumed, for the sake of simplification, that folder ticket (temporary limited ticket) contains a current number of times of use. The document management server 10 retains and manages the folder ticket (temporary limited ticket) as shown in FIG. 37.

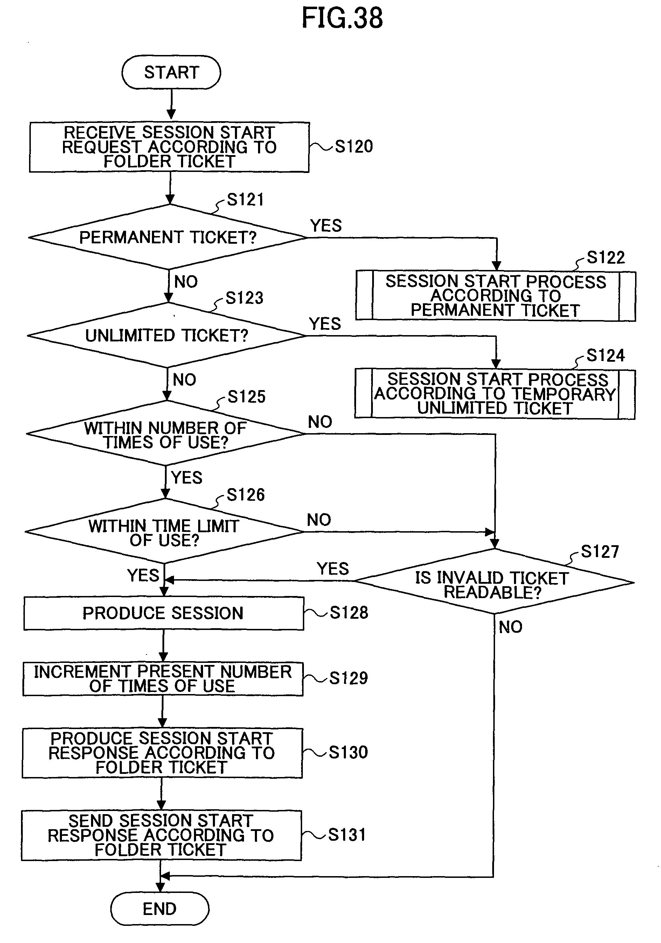

A description will be given below, with reference to FIG. 38, of an example of a session start according to the folder ticket (temporary limited ticket). FIG. 38 is a flowchart of a session start process according to a folder ticket (temporary limited ticket) .

In step S120, the document management server 10 receives from the client B, for example, a session start request according to the folder ticket as shown in FIG. 10. Subsequent to step S120, the process proceeds to step S121 where the document management server 10 determines whether or not the folder ticket is a permanent ticket by referring to the folder ticket (temporary limited ticket) based on the folder ticket ID contained in the session start request according to the folder ticket.

If the document management server 10 determines that the folder ticket is a permanent ticket (YES of step S121), the process proceeds to step S122. On the other hand, if the document management server 10 determines that the folder ticket is not a permanent ticket (NO of step S121), the process proceeds to step S123.

In step S122, the document management server 10 performs a session start process according to the permanent ticket. On the other hand, in step S123, the document management server 10 determines whether or not the folder ticket is a limited ticket by referring to the corresponding folder ticket (temporary limited ticket) based on the folder ticket ID contained in the session start request according to the folder ticket.

It should be noted that the limited ticket mans a ticket containing "-1" as a number of times of use. This applies through the following description.

If the document management server 10 determines that the folder ticket is a limited ticket (YES of step S123), the process proceeds to step S124. If the document management server 10 determines that the folder ticket is not a limited ticket (NO of step S123), the process proceeds to step S125. In step S124, the document management server 10 performs a session start process according to the temporary unlimited ticket.

On the other hand, in step S125, the document management server 10 determines whether or not the present number of times of use of the folder ticket (temporary limited ticket) by referring to the folder ticket (temporary limited ticket) based on the folder ticket ID contained in the session start request according to the folder ticket.

If the document management server 10 determines that the present number of times of use is within the valid number of times of use, the process proceeds to step S126. On the other hand, if the document management server 10 determines that the present number of times of use is not within the valid number of time of use (NO of step S125), the process proceeds to step S127.

In step S126, the document management server 10 determines whether or not the present time is within the valid time limit by referring to the corresponding folder ticket (temporary limited ticket) based on the folder ticket ID contained in the session start request according to the folder ticket. If the document management server 10 determines that the present time is within the valid limit time (YES of step S126), the process proceeds to step S128. On the other hand, if the document management server 10 determines that the present time is not within the valid limit time (NO of step S126), the process proceeds to step S127.

In step S127, the document management server 10 determines whether or not "READ_ONLY" is contained as authority of the folder ticket of which time limit of use or a number of times of use is reached in the folder ticket by referring to the corresponding folder ticket (temporary limited ticket) based on the folder ticket ID contained in the session start request according to the folder ticket. If the document management server 10 determines that "READ_ONLY" is contained in the folder ticket (YES of step S127), the process proceeds to step S128. On the other hand, if the document management server 10 determines that "READ_ONLY" is not contained in the folder ticket (NO of step S127), the process is ended. On the other hand, in step S128, the document management server 10 produces the session according to the folder ticket as shown in FIG. 11.

It should be noted that if it is determined, in step S127, that "READ_ONLY" is contained in the folder ticket (temporary limited ticket) and the process proceeds to step S128, a session containing "READ_ONLY" as authority of the session in the session such as shown in FIG. 11 may be produced since it is necessary to produce, in step S128, a session of which authority is limited such that only document reading is permitted.

Subsequent to step S128, the process proceeds to S129 where the document management server 10 increments the present number of times of use contained in the corresponding folder ticket (temporary limited ticket) based on the folder ticket ID contained in the session start request according to the folder ticket. Subsequent to step S129, the process proceeds to step S130 where the document management server 10 produces the session start response according to the folder ticket such as shown in FIG. 12. Subsequent to step S130, the process proceeds to step S131 where the document management server 10 sends the session start response produced in step S130 to the requester (for example, the client B).

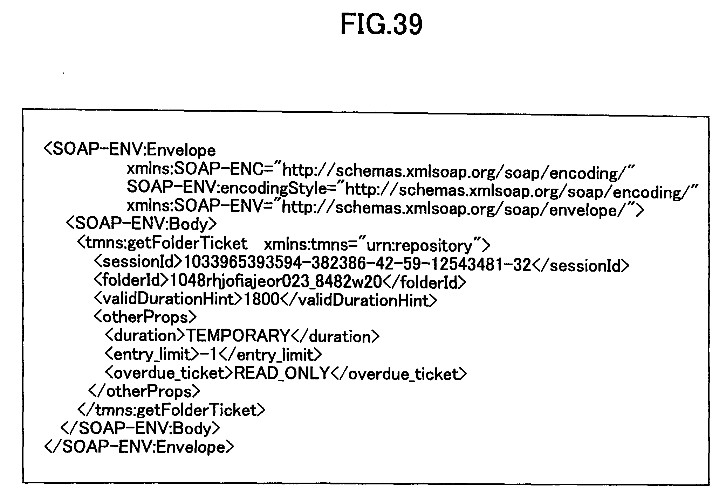

A description will now be given, with reference to FIG. 39, of an example of the folder ticket (temporary unlimited ticket) acquisition request. FIG. 39 is an illustration for explaining an example of the folder ticket (temporary unlimited ticket) acquisition request.

As shown in FIG. 39, the folder ID is provided between the tags <folderId> and </folderId> contained in the folder ticket (temporary unlimited ticket) acquisition request as explained with reference to FIG. 6. Moreover, the time limit of use of the folder to be produced is provided in a unit of second between the tags <validDurationHint> and </validDurationHint> contained in the folder ticket (temporary unlimited ticket) acquisition request of FIG. 39. Moreover, "TEMPORARY" is provided between the tags <duration> and </duration> contained in the folder ticket (temporary multiple ticket) acquisition request of FIG. 39. Moreover, "-1" is provided between the tags <entry_limit> and </entry_limit> contained in the folder ticket (temporary unlimited ticket) acquisition request of FIG. 39. Moreover, "READ_ONLY" is provided between the tags <overdue_ticket> and </overdue_ticket> contained in the folder ticket (temporary unlimited ticket) acquisition request of FIG. 39.

As shown in FIG. 39, the client B, for example, can designate the valid time period of the folder ticket (1800 seconds in the example of FIG. 39) by providing values between the tags <validDurationHint> and </validDurationHint> and between the tags <duration> and </duration>. Moreover, as shown in FIG. 39, the client B can designate a number of times of use of the folder ticket (unlimited timed in the example of FIG. 39) by providing a value between the tags <entry_limit> and </entry_limit>. Moreover, as shown in FIG. 39, the client B can designate authority (reading authority in the example of FIG. 39) of the folder ticket of which time limit is reached by providing a value between the tags <overdue_ticket> and </overdue_ticket>.

A description will now be given, with reference to FIG. 40, of an example of the folder ticket which the document management server 10 produced based on the folder ticket (temporary unlimited ticket) acquisition request of FIG. 39. FIG. 40 is an illustration for explaining an example of the folder ticket (temporary unlimited ticket).

As shown in FIG. 40, the folder ticket (temporary unlimited ticket) includes: the folder ticket ID which discriminates the folder ticket (temporary unlimited ticket); the folder ID which discriminates a folder of which use is permitted by the folder ticket (temporary unlimited ticket), that is, the value provided between the tags <folderId> and </folderId> of the folder ticket (temporary unlimited ticket) acquisition request as a result in the example of FIG. 40; the time limit of use of the folder ticket, that is, the value provided between the tags <validDurationHint> and </validDurationHint> of the folder ticket (temporary unlimited ticket) acquisition request as a result in the example of FIG. 40; the value provided between the tags <duration> and </duration> of the folder ticket (temporary unlimited ticket) acquisition request; the value provided between the tags <entry_limit> and </entry_limit> of the folder ticket (temporary unlimited ticket) acquisition request; and the value provided between the tags <overdue_ticket> and </overdue_ticket> of the folder ticket (temporary unlimited ticket) acquisition request.

The document management server 10 retains and manages the folder ticket (temporary unlimited ticket) such as shown in FIG. 40.

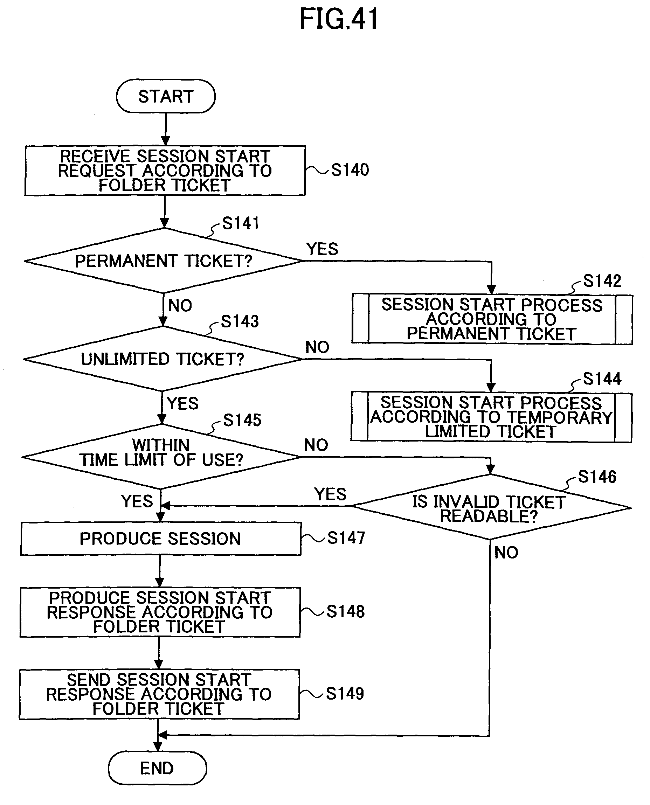

A description will be given, with reference to FIG. 41, of an example of a session start process according to the folder ticket (temporary unlimited ticket). FIG. 41 is a flowchart for explaining an example of a session start process according to the folder ticket (temporary unlimited ticket).

In step S140, the document management server 10 receives from the client B, for example, a session start request according to the folder ticket as shown in FIG. 10. Subsequent to step S140, the process proceeds to step S141 where the document management server 10 determines whether or not the folder ticket is a permanent ticket by referring to the folder ticket (temporary unlimited ticket) based on the folder ticket ID contained in the session start request according to the folder ticket.

If the document management server 10 determines that the folder ticket is a permanent ticket (YES of step S141), the process proceeds to step S142. On the other hand, if the document management server 10 determines that the folder ticket is not a permanent ticket (NO of step S141), the process proceeds to step S143.

In step S142, the document management server 10 performs a session start process according to the permanent ticket. On the other hand, in step S143, the document management server 10 determines whether or not the folder ticket is an unlimited ticket by referring to the corresponding folder ticket (temporary unlimited ticket) based on the folder ticket ID contained in the session start request according to the folder ticket. If the document management server 10 determines that the folder ticket is an unlimited ticket (YES of step S143), the process proceeds to step S145.

If the document management server 10 determines that the folder ticket is not an unlimited ticket (NO of step S143), the process proceeds to step S144. In step S144, the document management server 10 performs a process from the step S125 of FIG. 38. On the other hand, in step S145, the document management server 10 determines whether or not the present time is within a valid time period by referring to the folder ticket (temporary unlimited ticket) based on the folder ticket ID contained in the session start request according to the folder ticket. If the document management server 10 determines that the present time is within the valid time period (YES of step S145), the process proceeds to step S147.

On the other hand, if the document management server 10 determines that the present time is within the valid time period (NO of step S145), the process proceeds to step S146. In step S146, the document management server 10 determines whether or not "READ_ONLY" is contained as authority of the folder ticket of which time limit of use is reached in the folder ticket by referring to the corresponding folder ticket (temporary unlimited ticket) based on the folder ticket ID contained in the session start request according to the folder ticket.

If the document management server 10 determines that "READ_ONLY" is contained in the folder ticket (YES of step S146), the process proceeds to step S147. On the other hand, if the document management server 10 determines that "READ_ONLY" is not contained in the folder ticket (NO of step S146), the process is ended.

On the other hand, in step S147, the document management server 10 produces the session according to the folder ticket as shown in FIG. 11.

It should be noted that if it is determined, in step 51,46, that "READ_ONLY" is contained in the folder ticket (temporary unlimited ticket) and the process proceeds to step S147, a session containing "READ_ONLY" as authority of the session in the session such as shown in FIG. 11 may be produced since it is necessary to produce, in step S147, a session of which authority is limited such that only document reading is permitted.

Subsequent to step S147, the process proceeds to S148 where the document management server 10 produces the session start response according to the folder ticket such as shown in FIG. 12. Subsequent to step S148, the process proceeds to step S149 where the document management server 10 sends the session start response produced in step S148 to the requester (for example, the client B).

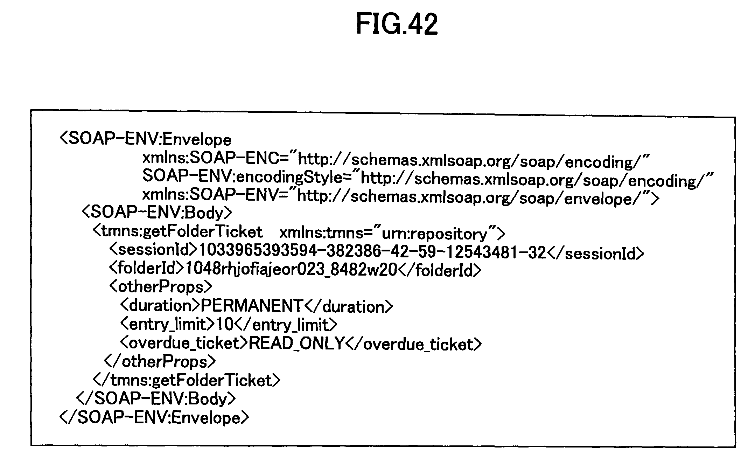

A description will now be given, with reference to FIG. 42, of an example of the folder ticket (permanent limited ticket) acquisition request. FIG. 42 is an illustration for explaining an example of the folder ticket (permanent limited ticket) acquisition request.

As shown in FIG. 42, the folder ID is provided between the tags <folderId> and </folderId> contained in the folder ticket (permanent single ticket) acquisition request as explained with reference to FIG. 6. Moreover, "PERMANENT" is provided between the tags <duration> and </duration> contained in the folder ticket (permanent single ticket) acquisition request of FIG. 42. Moreover, "10" is provided between the tags <entry_limit> and </entry_limit> contained in the folder ticket (permanent limited ticket) acquisition request of FIG. 42. Moreover, "READ_ONLY" is provided between the tags <overdue_ticket> and </overdue_ticket> contained in the folder ticket (permanent limited ticket) acquisition request of FIG. 42.

As shown in FIG. 42, the client B, for example, can designate the valid time period of the folder ticket (permanent in the example of FIG. 42) by providing a value between the tags <duration> and </duration>. Moreover, as shown in FIG. 42, the client B can designate a number of times of use of the folder ticket (10 times in the example of FIG. 42) by providing a value between the tags <entry_limit> and </entry_limit>. Moreover, as shown in FIG. 42, the client B can designate authority (reading authority in the example of FIG. 42) of the folder ticket of which the limited number of times of use is reached by providing a value between the tags <overdue_ticket> and </overdue_ticket>.

A description will now be given, with reference to FIG. 43, of an example of a folder ticket (permanent limited ticket), which the document management server 10 produced, based on the folder ticket (permanent limited ticket) acquisition request of FIG. 42. FIG. 43 is an illustration for explaining an example of a folder ticket (permanent limited ticket).

As shown in FIG. 43, the folder ticket (permanent single ticket) includes: a folder ticket ID, which discriminates the folder ticket (permanent limited ticket); a folder ID, which discriminates the folder, which the folder ticket (permanent unlimited ticket) permits use thereof; the value provided between the tags <folderId> and </folderId> of the folder ticket (permanent limited ticket) acquisition request as a result in the example of FIG. 43; the value provided between the tags <duration> and <duration> of the folder ticket (permanent limited ticket) acquisition request; the value provided between the tags <entry_limit> and </entry_limit> of the folder ticket (permanent limited ticket) acquisition request; and the value provided between the tags <overdue_ticket> and </overdue_ticket> of the folder ticket (temporary limited ticket) acquisition request.

It should be noted that, although not illustrated in FIG. 43, a number of times of use thus far (that is, for example, a value initially set to 0 and incremented by one when it is used one time) may be provided to the folder ticket shown in FIG. 43. In the following description, it is assumed, for the sake of simplification, that folder ticket (permanent limited ticket) contains a current number of times of use. The document management server 10 retains and manages the folder ticket (permanent limited ticket) as shown in FIG. 43.

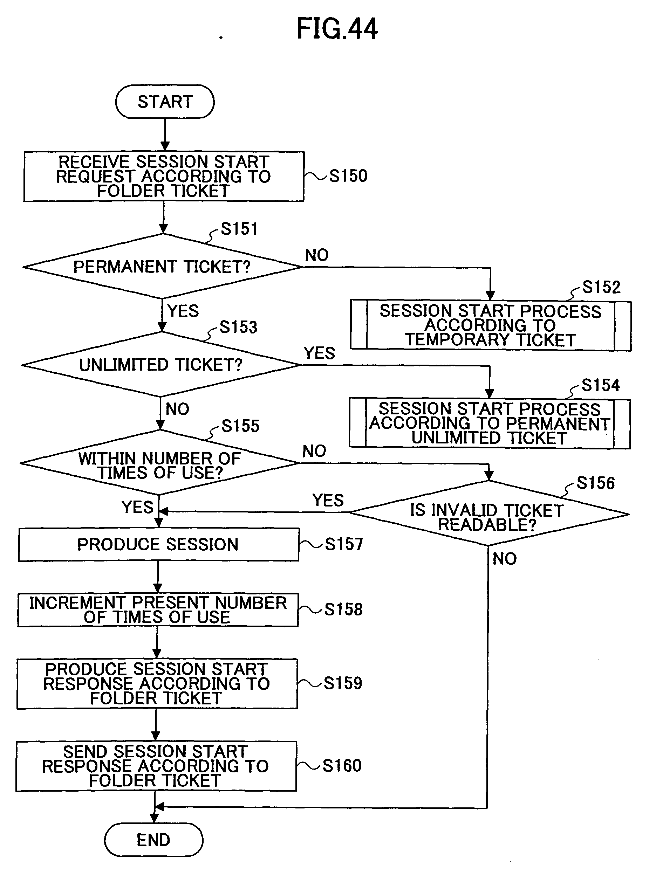

A description will be given below, with reference to FIG. 44, of an example of a session start according to the folder ticket (permanent single ticket). FIG. 44 is a flowchart of a session start process according to the folder ticket (permanent limited ticket).

In step S150, the document management server 10 receives from the client B, for example, a session start request according to the folder ticket as shown in FIG. 10. Subsequent to step S150, the process proceeds to step S151 where the document management server 10 determines whether or not the folder ticket is a permanent ticket by referring to the folder ticket (permanent limited ticket) based on the folder ticket ID contained in the session start request according to the folder ticket.

If the document management server 10 determines that the folder ticket is a permanent ticket (YES of step S151), the process proceeds to step S153. On the other hand, if the document management server 10 determines that the folder ticket is not a permanent ticket (NO of step S151), the process proceeds to step S152. In step S152, the document management server 10 performs a session start process according to a temporary ticket.

On the other hand, in step S153, the document management server 10 determines whether or not the folder ticket is an unlimited ticket by referring to the corresponding folder ticket (permanent limited ticket) based on the folder ticket ID contained in the session start request according to the folder ticket. If the document management server 10 determines that the ticket is an unlimited ticket (YES of step S153), the process proceeds to step S154. On the other hand, if the document management server 10 determines that the ticket is not an unlimited ticket (NO of step S153), the process proceeds to step S155.

In step S154, the document management server 10 performs a session start process according to the permanent unlimited ticket. On the other hand, in step S155, the document management server 10 determines whether or not the present number of times of use of the folder ticket (permanent limited ticket) by referring to the folder ticket (permanent limited ticket) based on the folder ticket ID contained in the session start request according to the folder ticket.

If the document management server 10 determines that the present number of times of use is within the valid number of times of use, the process proceeds to step S157. On the other hand, if the document management server 10 determines that the present number of times of use is not within the valid number of time of use (NO of step S155), the process proceeds to step S156.

In step S156, the document management server 10 determines whether or not "READ_ONLY" is contained as authority of the folder ticket of which number of times of use is reached in the folder ticket by referring to the corresponding folder ticket (permanent limited ticket) based on the folder ticket ID contained in the session start request according to the folder ticket. If the document management server 10 determines that "READ_ONLY" is contained in the folder ticket (YES of step S156), the process proceeds to step S157. On the other hand, if the document management server 10 determines that "READ_ONLY" is not contained in the folder ticket (NO of step S156), the process is ended. On the other hand, in step S157, the document management server 10 produces the session according to the folder ticket as shown in FIG. 11.

It should be noted that if it is determined, in step S156, that "READ_ONLY" is contained in the folder ticket (permanent limited ticket) and the process proceeds to step S157, a session containing "READ_ONLY" as authority of the session in the session such as shown in FIG. 11 may be produced since it is necessary to produce, in step S157, a session of which authority is limited such that only document reading is permitted. Subsequent to step S157, the process proceeds to S158 where the document management server 10 increments the present number of times of use contained in the corresponding folder ticket (permanent limited ticket) based on the folder ticket ID contained in the session start request according to the folder ticket.

Subsequent to step S158, the process proceeds to step S159 where the document management server 10 produces the session start response according to the folder ticket such as shown in FIG. 12. Subsequent to step S159, the process proceeds to step S160 where the document management server 10 sends the session start response produced in step S159 to the requester (for example, the client B).

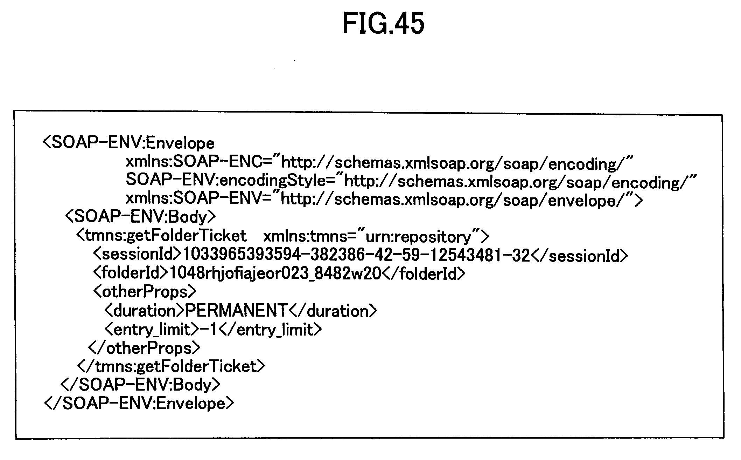

A description will now be given, with reference to FIG. 45, of an example of the folder ticket (permanent unlimited ticket) acquisition request. FIG. 45 is an illustration for explaining an example of the folder ticket (permanent unlimited ticket) acquisition request.

As shown in FIG. 45, the folder ID is provided between the tags <folderId> and </folderId> contained in the folder ticket (permanent unlimited ticket) acquisition request as explained with reference to FIG. 6. Moreover, "PERMANENT" is provided between the tags <duration> and </duration> contained in the folder ticket (permanent unlimited ticket) acquisition request of FIG. 45. Moreover, "-1" is provided between the tags <entry_limit> and </entry_limit> contained in the folder ticket (permanent unlimited ticket) acquisition request of FIG. 45.

As shown in FIG. 45, the client B can designate a time limit of use of the folder ticket (permanent in the example of FIG. 45) by providing a value between the tags <duration> and </duration>. Moreover, as shown in FIG. 45, the client B can designate a number of times of use of the folder ticket (unlimited times in the example of FIG. 45) by providing a value between the tags <entry_limit> and </entry_limit>.

A description will now be given, with reference to FIG. 46, of an example of the folder ticket which the document management server 10 produced based on the folder ticket (permanent unlimited ticket) acquisition request of FIG. 45. FIG. 46 is an illustration for explaining an example of the folder ticket (permanent unlimited ticket).

As shown in FIG. 46, the folder ticket (permanent unlimited ticket) includes: the folder ticket ID which discriminates the folder ticket (permanent unlimited ticket); the folder ID which discriminates a folder of which use is permitted by the folder ticket (permanent unlimited ticket), that is, the value provided between the tags <folderId> and </folderId> of the folder ticket (permanent unlimited ticket) acquisition request as a result in the example of FIG. 46; the value provided between the tags <duration> and </duration> of the folder ticket (permanent unlimited ticket) acquisition request; and the value provided between the tags <entry_limit> and </entry_limit> of the folder ticket (permanent unlimited ticket) acquisition request.

The document management server 10 retains and manages the folder ticket (permanent unlimited ticket) such as shown in FIG. 46.

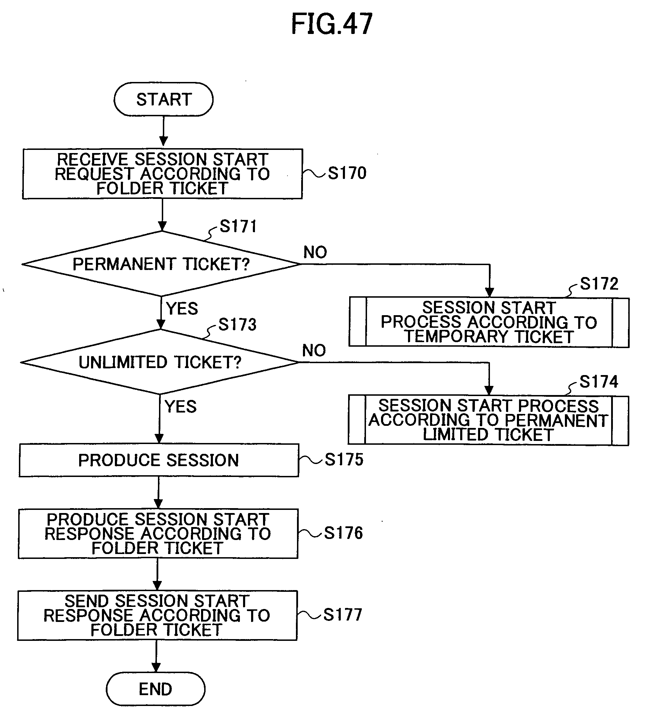

A description will be given, with reference to FIG. 47, of an example of a session start process according to the folder ticket (permanent unlimited ticket). FIG. 47 is a flowchart for explaining an example of a session start process according to the folder ticket (permanent unlimited ticket).

In step S170, the document management server 10 receives from the client B, for example, a session start request according to the folder ticket as shown in FIG. 10. Subsequent to step S170, the process proceeds to step S171 where the document management server 10 determines whether or not the folder ticket is a permanent ticket by referring to the folder ticket (permanent unlimited ticket) based on the folder ticket ID contained in the session start request according to the folder ticket.

If the document management server 10 determines that the folder ticket is a permanent ticket (YES of step S171, the process proceeds to step S173. On the other hand, if the document management server 10 determines that the folder ticket is not a permanent ticket (NO of step S171), the process proceeds to step S172. In step S172, the document management server 10 performs a session start process according to a temporary ticket.

On the other hand, in step S173, the document management server 10 determines whether or not the folder ticket is an unlimited ticket by referring to the corresponding folder ticket (permanent unlimited ticket) based on the folder ticket ID contained in the session start request according to the folder ticket. If the document management server 10 determines that the folder ticket is an unlimited ticket (YES of step S173), the process proceeds to step S175. If the document management server 10 determines that the folder ticket is not an unlimited ticket (NO of step S153), the process proceeds to step S174.

In step S174, the document management server 10 performs a process from the step S155 of FIG. 44. On the other hand, in step S175, the document management server 10 produces the session according to the folder ticket as shown in FIG. 11. Subsequent to step S175, the process proceeds to S176 where the document management server 10 produces the session start response according to the folder ticket such as shown in FIG. 12. Subsequent to step S176, the process proceeds to step S177 where the document management server 10 sends the session start response produced in step S176 to the requester (for example, the client B).

### (Second Embodiment)

Although the document ticket ID or the folder ticket ID is returned to a client in the above-mentioned first embodiment, the document ticket or the folder ticket may be decrypted in the document management server 10 so as to return the decrypted document ticket or folder ticket to a client. Hereinafter, a second embodiment of the present embodiment is directed to a case where the document ticket or the folder ticket is decrypted by the document management server 10 and return the decrypted document ticket or folder ticket to a client.

It should be noted that the following description is mainly directed to differences between the second embodiment and the first embodiment.

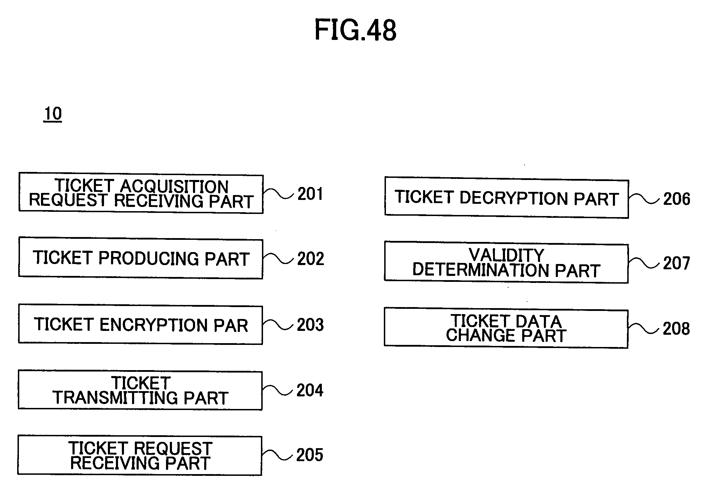

FIG. 48 is a functional diagram (part 2) of the document management server according to the second embodiment of the present invention.

As shown in FIG. 48, the document management server 10 according to the second embodiment comprises a ticket acquisition request receiving part 201, a ticket producing part 202, a ticket encryption part 203, a ticket transmitting part 204, a ticket request receiving part 205, a ticket decryption part 206, a validity determination part 207, and a ticket data conversion part 208.

The ticket acquisition request receiving part 201 receives a document ticket or a folder ticket from a client (for example, a client A mentioned later). The document ticket serves as authentication information, which authenticates permission of a document managed in the document management server 10. The folder ticket serves as authentication information, which authenticates permission of a folder in the document management server 10.

The ticket producing part 202 produces a document ticket or a folder ticket in accordance with information contained in the document ticket or the folder ticket which the ticket acquisition request receiving part 201 received, the information relating to a time limit of use and/or a number of times of use of the document ticket or the folder ticket.

The ticket encryption part 203 encrypts the document ticket or the folder ticket produced by the ticket producing part 202.

The ticket transmitting part 204 sends the document ticket or the folder ticket, which has been decrypted by the ticket decryption part 203, to a client (for example, the client A) that requested the document ticket or the folder ticket.

The ticket request receiving part 205 receives a request (for example, a session start request) containing the encrypted document ticket or the encrypted folder ticket from a client (for example, the client A or the client B).

The ticket decryption part 206 decrypts the encrypted document ticket or the encrypted folder ticket contained in the request received by the ticket request receiving part 205.

The validity determination part 207 determines the validity of the document ticket or the folder ticket based on a number of times of use or a time limit of use contained in the decrypted document ticket or the decrypted folder ticket that has been decrypted by the ticket decryption part 206.

The ticket data change part 208 changes the number of times of use of the document ticket or the folder ticket, or changes the time limit of use of the document ticket or the folder ticket according to the request from a client (for example, a client B).

It should be noted that although not illustrated in FIG. 48, an ID management part may be included in the functional structure of the document management server 10.

It should be noted that, in the following description, a case of using the folder ticket will be mainly explained for the sake of simplification. However, this does not limit the present invention.

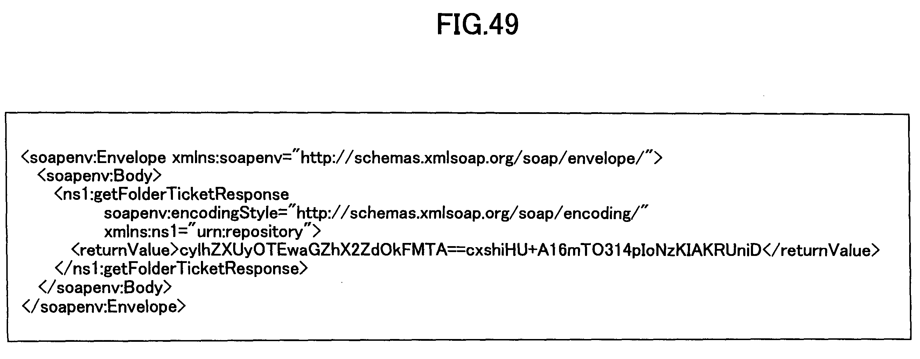

Hereafter, a description will be given, with reference to FIG. 49, of another example of the folder ticket acquisition response. FIG. 49 is an illustration for explaining another example of the folder ticket acquisition response.

As shown in FIG. 49, a value obtained by encrypting the folder ticket is provided between the tags <returnValue> and </returnValue> of the folder ticket acquisition response.

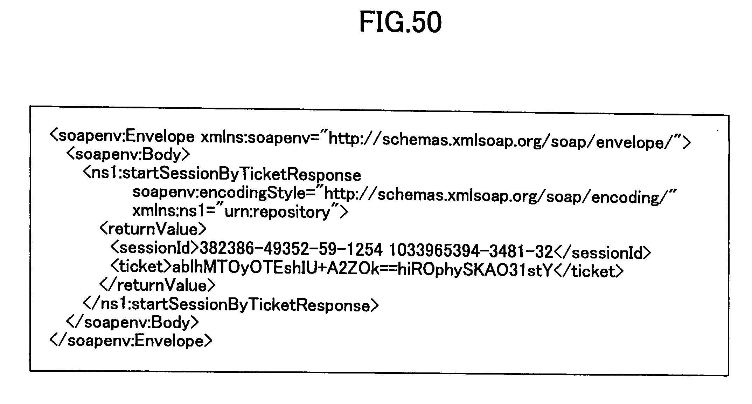

A description will now be given, with reference to FIG. 50, of another example of the session start response according to a folder ticket. FIG. 50 is an illustration for explaining another example of the session start response according to a folder ticket.

In the second embodiment, as shown in FIG. 50, the session ID which discriminates the session according to a folder ticket is provided between the tags <returnValue> and </returnValue> of the session start response according to a folder ticket. Additionally, a value obtained by encrypting the folder ticket of which a number of times of use and/or a time limit of use have been changed is provided between the tags <ticket> and </ticket>.

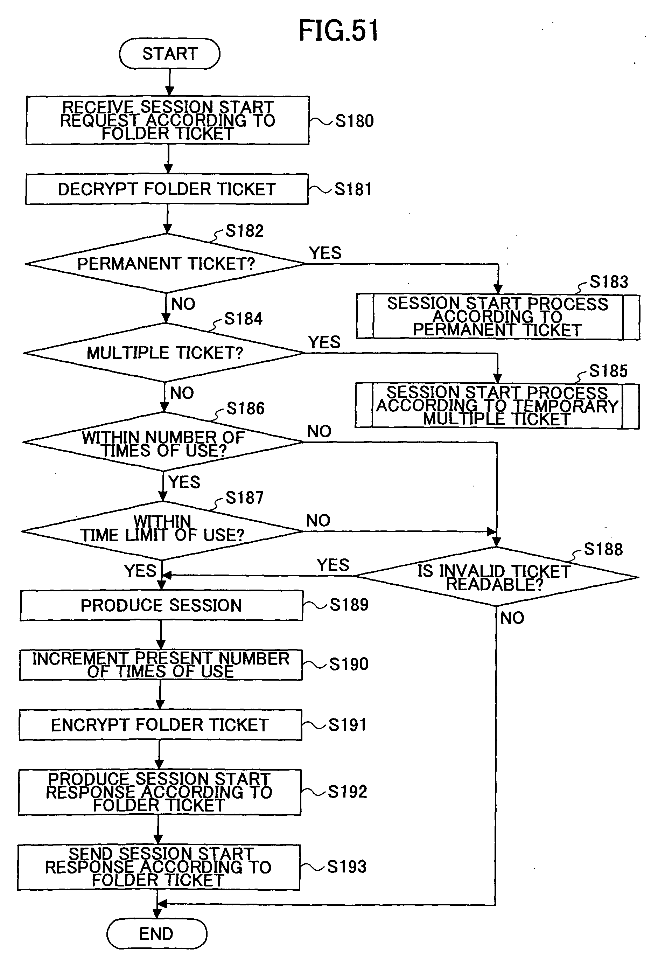

A description will now be given, with reference to FIG. 51, of a further example of the session start response according to a folder ticket (temporary single ticket). FIG. 51 is an illustration for explaining a further example of the session start response according to a folder ticket (temporary single ticket) .

In step S180, the document management server 10 receives from the client B, for example, a session start request according to the folder ticket as shown in FIG. 10. Subsequent to step S180, the process proceeds to step S181 where the document management server 10 decrypts the encrypted folder ticket contained in the session start request according to the folder ticket.

Subsequent to step S181, the process proceeds to step S182 where the document management server 10 determines whether or not the decrypted folder ticket is a permanent ticket by referring to the folder ticket (temporary single ticket). If the document management server 10 determines that the decrypted folder ticket is a permanent ticket (YES of step S182), the process proceeds to step S183. On the other hand, if the document management server 10 determines that the decrypted folder ticket is not a permanent ticket (NO of step S182), the process proceeds to step S184.

In step S183, the document management server 10 performs a session start process according to the permanent ticket. On the other hand, in step S184, the document management server 10 determines whether or not the folder ticket is a multiple ticket by referring to the decrypted folder ticket (temporary single ticket).

If the document management server 10 determines that the folder ticket is a multiple ticket (YES of step S184), the process proceeds to step S185. If the document management server 10 determines that the folder ticket is not a multiple ticket (NO of step S184), the process proceeds to step S186. In step S185, the document management server 10 performs a session start process according to the temporary multiple ticket. On the other hand, in step S186, the document management server 10 determines whether or not the present number of times of use of the folder ticket (temporary single ticket) is within a valid number of times of use by referring to the decrypted folder ticket (temporary single ticket) .

If the document management server 10 determines that the present number of times of use is within the valid number of times of use, that is, the present number of times of use is 0 in the example of FIG. 51 (YES of step S186), the process proceeds to step S187. On the other hand, if the document management server 10 determines that the present number of times of use is not within the valid number of time of use, that is, the present number of times of use is equal to or greater than 1 in the example of FIG. 51 (NO of step S186), the process proceeds to step S188.

In step S187, the document management server 10 determines whether or not the present time is within the valid time limit by referring to the decrypted folder ticket (temporary single ticket). If the document management server 10 determines that the present time is within the valid limit time (YES of step S187), the process proceeds to step S189. On the other hand, if the document management server 10 determines that the present time is not within the valid limit time (NO of step S187), the process proceeds to step S188.

In step S188, the document management server 10 determines whether or not "READ_ONLY" is contained as authority of the folder ticket of which time limit of use or a number of times of use is reached in the folder ticket by referring to the decrypted folder ticket (temporary single ticket). If the document management server 10 determines that "READ_ONLY" is contained in the folder ticket (YES of step S188), the process proceeds to step S189. On the other hand, if the document management server 10 determines that "READ_ONLY" is not contained in the folder ticket (NO of step S188), the process is ended. On the other hand, in step S189, the document management server 10 produces the session containing the encrypted folder ticket.

It should be noted that if it is determined, in step S188, that "READ_ONLY" is contained in the folder ticket (temporary single ticket) and the process proceeds to step S189, a session containing "READ_ONLY" as authority of the session may be produced since it is necessary to produce, in step S189, a session of which authority is limited such that only document reading is permitted. Subsequent to step S189, the process proceeds to S190 where the document management server 10 increments the present number of times of use contained in the decrypted folder ticket (temporary single ticket).

Subsequent to step S190, the process proceeds to step S191 where the document management server 10 encrypts the folder ticket of which number of times of use is changes so as to update the folder ticket. Subsequent to step S191, the process proceeds to step S192 where the document management server 10 produces the session start response according to the folder ticket such as shown in FIG. 50. Subsequent to step S192, the process proceeds to step S193 where the document management server 10 sends the session start response produced in step S192 to the requester (for example, the client B).

It should be noted that although the number of times of use of the folder ticket is changed and the folder ticket is updated in the example of FIG. 51, the period (time limit of use) of the folder ticket may be changed in accordance with a valid time period of the session requested by the client B, for example, so as to update (re-encrypt) the folder ticket depending on the kind of the folder ticket.

By changing the time period of use and updating (re-encrypting) the folder ticket, a session according to, for example, a folder ticket is started, which prevents a problem in the a process to the folder is not performed due to expiration of the folder ticket even though it is within the time limit of use of the session.

It should be noted that the encrypted folder ticket contained in the response (for example, the session start response according to a folder ticket) received by the document management server 10 may be decrypted so as to display information regarding the time limit and the number of times of use contained in the folder ticket in the client A or the client B. The hardware structure of the client A or the client B is the same as the hardware structure of the document management server 10.

As mentioned above, according to the present invention, a folder to a document can be made usable while maintaining security without applying a load to the network. Moreover, according to the present invention, a time limit of use and/or a number of times of use can be made designatable in a case where a user uses a folder or a document.

The present invention is not limited to the specifically disclosed embodiments, and variations and modifications may be made without departing from the scope of the present invention.

## Claims

1. A document management apparatus for managing documents, **characterized by**:
authentication information acquisition request receiving means for receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information;
authentication information producing means for producing the authentication information in accordance with the acquisition request of the authentication information;
authentication information sending means for sending the authentication information to said client;
request receiving means for receiving a request containing the authentication information from said client that has sent the authentication information or a client different from said client that has sent the authentication information; and
validity determining means for determining validity of the authentication information contained in the request.

2. The document management apparatus as claimed in claim 1, wherein said validity determining means determines the validity of the authentication information based on the time limit of use of the authentication information.

3. The document management apparatus as claimed in claim 1 or 2, wherein said validity determining means determines the validity of the authentication information based on the number of times of use of the authentication information.

4. The document management apparatus as claimed in one of claims 1 to 3, wherein the acquisition request of the authentication information further contains information regarding authority of the authentication information when the time limit of use or the number of times of use runs out.

5. The document management apparatus as claimed in one of claims 1 to 4, wherein the information regarding the time limit of use of the authentication information indicates whether the authentication information is valid within a designated time limit or the authentication information is valid permanently.

6. The document management apparatus as claimed in one of claims 1 to 5, wherein the information regarding the number of times of use of the authentication information indicates whether the authentication information is valid for one time use or valid for any number of times of use.

7. The document management apparatus as claimed in one of claims 1 to 6, wherein the information regarding the number of times of use of the authentication information indicates whether the authentication information is valid for designated number of times of use or valid for any number of times of use.

8. The document management apparatus as claimed in one of claims 3 to 7, wherein the information regarding authority of the authentication information when running out the time limit of use or the number of times of use indicates whether to invalidate the authentication information or give a limited authority when the time limit of use or the number of times of use runs out.

9. The document management apparatus as claimed in one of claims 1-9, further comprising changing means for changing the time limit of use and/or the number of times of use of the authentication information in accordance with the request containing the authentication information.

10. A document management method for managing documents in a document management apparatus,
**characterized by**:
an authentication information acquisition request receiving step of receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information;
an authentication information producing step of producing the authentication information in accordance with the acquisition request of the authentication information;
an authentication information sending step of sending the authentication information to said client;
a request receiving step of receiving a request containing the authentication information from said client that has sent the authentication information or a client different from said client that has sent the authentication information; and
a validity determining step of determining validity of the authentication information contained in the request.

11. The document management method as claimed in claim 10, wherein said validity determining step determines the validity of the authentication information based on the time limit of use of the authentication information.

12. The document management method as claimed in claim 10 or 11, wherein said validity determining step determines the validity of the authentication information based on the number of times of use of the authentication information.

13. The document management method as claimed in one of claims 10 to 12, wherein the acquisition request of the authentication information further contains information regarding authority of the authentication information when the time limit of use or the number of times of use runs out.

14. The document management method as claimed in one of claims 10 to 13, wherein the information regarding the time limit of use of the authentication information indicates whether the authentication information is valid within a designated time limit or the authentication information is valid permanently.

15. The document management method as claimed in one of claims 10 to 14, wherein the information regarding the number of times of use of the authentication information indicates whether the authentication information is valid for one time use or valid for any number of times of use.

16. The document management method as claimed in one of claims 10 to 15, wherein the information regarding the number of times of use of the authentication information indicates whether the authentication information is valid for designated number of times of use or valid for any number of times of use.

17. The document management method as claimed in one of claims 13 to 16, wherein the information regarding authority of the authentication information when running out the time limit of use or the number of times of use indicates whether to invalidate the authentication information or give a limited authority when the time limit of use or the number of times of use runs out.

18. The document management method as claimed in one of claims 10 to 17, further comprising a changing step of changing the time limit of use and/or the number of times of use of the authentication information in accordance with the request containing the authentication information.

19. A recording medium storing a document management program that causes a computer to perform a document management method for managing documents in a document management apparatus, the document management method **characterized by** comprising:
an authentication information acquisition request receiving step of receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information;
an authentication information producing step of producing the authentication information in accordance with the acquisition request of the authentication information;
an authentication information sending step of sending the authentication information to said client;
a request receiving step of receiving a request containing the authentication information from said client that has sent the authentication information or a client different from said client that has sent the authentication information; and
a validity determining step of determining validity of the authentication information contained in the request.

20. A document management program that causes a computer to perform a document management method for managing documents in a document management apparatus, the document management method **characterized by** comprising:
an authentication information acquisition request receiving step of receiving an acquisition request of authentication information from a client that requests acquisition of the authentication information regarding the documents or the document storing means for storing the documents, the authentication information containing information regarding a time limit of use of the authentication information and/or information regarding a number of times of use of the authentication information;
an authentication information producing step of producing the authentication information in accordance with the acquisition request of the authentication information;
an authentication information sending step of sending the authentication information to said client;
a request receiving step of receiving a request containing the authentication information from said client that has sent the authentication information or a client different from said client that has sent the authentication information; and
a validity determining step of determining validity of the authentication information contained in the request.
